# FASCICULE DE BREVET EUROPEEN

(11) **EP 3 728 088 B1**
(45) Date de publication et mention de la délivrance du brevet: **09.02.2022**
(21) Numéro de dépôt: 18819549.9
(22) Date de dépôt: 06.12.2018
(51) Int. Cl.: B65G 51/01, B08B 1/00

(54) **PROCÉDÉ ET DISPOSITIF DE GROUPAGE EN LOTS D'OBJETS FLOTTANTS AVEC SUPERPOSITION HYDRAULIQUE DYNAMIQUE DES OBJETS**
VERFAHREN UND VORRICHTUNG ZUM GRUPPIEREN VON SCHWIMMARTIKELN IN CHARGEN MIT DYNAMISCHER HYDRAULISCHER ÜBERLAGERUNGEN DER ARTIKEL
METHOD AND DEVICE FOR GROUPING FLOATING ARTICLES INTO BATCHES, WITH DYNAMIC HYDRAULIC SUPERIMPOSITION OF THE ARTICLES

(30) Priorité: 22.12.2017 FR 1763101
(43) Date de publication de la demande: 28.10.2020
(73) Titulaire: MAF Agrobotic, 82000 Montauban (FR)
(72) Inventeur: BLANC, Stéphane, 82000 MONTAUBAN (FR)
(74) Mandataire: BARRE LAFORGUE
(86) Numéro de dépôt international: PCT/FR2018/053132
(87) Numéro de publication internationale: WO 2019/122571

(56) Documents cités:
- EP-A1- 2 361 695
- EP-A1- 2 931 635
- FR-A1- 2 808 706
- FR-A1- 2 868 042

## Description

L'invention concerne un procédé et un dispositif de groupage en lots d'objets flottants, notamment des objets fragiles tels que des fruits ou légumes flottants (pommes, tomates,...) ou autres, avec superposition des objets dans au moins un canal hydraulique d'accumulation des objets par lots.

Dans tout le texte, on désigne par "objet flottant" tout objet présentant une flottaison suffisante dans un courant de liquide pour pouvoir être transporté par ce dernier. En conséquence, cette terminologie couvre non seulement les objets flottants en surface du courant liquide, mais également en particulier les objets situés entre deux eaux.

Dans les installations de calibrage ou de tri d'objets, tels que des fruits fragiles, présentant des canaux pour le transport hydraulique des objets (permettant notamment d'éviter de les endommager), il est intéressant de pouvoir réduire la longueur totale de chaque canal d'accumulation permettant de regrouper les objets par lots, et donc la surface au sol de l'ensemble de l'installation.

Différents dispositifs pour former une superposition d'objets dans de tels canaux hydrauliques ont été proposés. EP2931635 et US9694366 divulguent un procédé de groupage en lots d'objets flottants dans au moins un canal selon le préambule de la revendication 1 et un dispositif de groupage en lots d'objets flottants selon le préambule de la revendication 6. EP2931635 et US9694366 décrivent un dispositif de groupage à superposition, dite superposition hydraulique, des objets dans les canaux d'accumulation, comprenant une restriction de section transversale formée par un ressaut du fond du canal d'accumulation produisant une accélération locale de la vitesse du courant hydraulique entraînant une superposition des objets retenus dans la zone de superposition entre cette restriction de section transversale et le dispositif de retenue/libération à l'extrémité aval du canal d'accumulation, qui est fermé pour retenir les objets dans le canal d'accumulation. Ce dispositif permet ainsi d'entraîner spontanément une superposition hydraulique, sans turbulences intempestives, ni détérioration des objets, ni débordement par ailleurs du canal d'accumulation. Une telle superposition des objets permet typiquement de réduire de moitié la longueur de chaque canal d'accumulation.

Néanmoins, un tel dispositif est limité dans ses performances, et on constate en pratique qu'il est souvent difficile d'obtenir une superposition en plus de deux couches.

L'invention vise donc à pallier ces inconvénients. À cet effet, elle vise à proposer un procédé selon la revendication 1 et un dispositif de groupage en lots d'objets flottants fragiles selon la revendication 6 permettant de former une superposition hydraulique plus efficace d'objets dans une zone de superposition de chaque canal d'accumulation, c'est-à-dire en particulier avec un plus grand nombre de couches superposées.

Plus particulièrement, l'invention vise à permettre une telle superposition hydraulique améliorée sans turbulences intempestives, ni détérioration des objets, ni débordement par ailleurs du canal d'accumulation.

L'invention vise également en particulier à permettre une telle superposition hydraulique améliorée sans pertes en rendement de l'installation, et même au contraire en améliorant le rendement de production des lots d'objets.

L'invention vise également à proposer un tel procédé et un tel dispositif de groupage qui présentent simultanément d'autres avantages, en particulier ne nécessitent qu'un débit réduit de courant hydraulique.

Dans tout le texte, les termes "amont" et "aval" sont utilisés en référence au sens de circulation des objets dans le dispositif de groupage, correspondant également au sens de circulation du courant hydraulique transportant ces objets.

L'invention concerne donc un procédé de groupage en lots d'objets flottants -notamment d'objets fragiles tels que des fruits ou légumes flottants- dans au moins un canal, dit canal d'accumulation, dans lequel :
- un courant hydraulique apte à transporter les objets est formé dans chaque canal d'accumulation,
- une portion amont d'au moins un canal d'accumulation est alimentée avec des objets de sorte que les objets sont transportés par le courant hydraulique le long du canal d'accumulation jusqu'à une extrémité aval de ce dernier dotée d'un dispositif de retenue/libération des objets, ce dispositif de retenue/libération étant transparent au courant hydraulique circulant dans le canal d'accumulation,
- chaque canal d'accumulation présentant un fond et des parois latérales et, au moins dans une portion aval de ce dernier, dite zone de superposition, une hauteur supérieure à deux fois l'encombrement vertical maximum de chaque objet de façon à pouvoir recevoir des objets superposés,
- la vitesse du courant hydraulique formé dans chaque canal d'accumulation est accélérée localement par un ressaut vers le haut du fond du canal d'accumulation formant une restriction de section transversale du canal d'accumulation ayant pour effet d'accélérer localement la vitesse du courant hydraulique passant au-dessus de ce ressaut, de façon à entraîner une superposition des objets retenus dans la zone de superposition du canal d'accumulation entre ledit ressaut et le dispositif de retenue/libération fermé pour retenir les objets,
caractérisé en ce que lors d'une étape d'accumulation d'objets dans un canal d'accumulation, ledit ressaut est déplacé dans ladite zone de superposition depuis l'extrémité aval du canal d'accumulation vers l'amont au fur et à mesure de l'alimentation des objets.

L'invention s'étend à un dispositif permettant la mise en oeuvre d'un procédé selon l'invention. Elle s'étend donc également à un dispositif de groupage en lots d'objets flottants -notamment d'objets fragiles tels que des fruits ou légumes flottants- comprenant :
- au moins un canal, dit canal d'accumulation,
- un dispositif d'alimentation hydraulique adapté pour former, dans chaque canal d'accumulation, un courant hydraulique apte à transporter les objets le long du canal d'accumulation,
- un dispositif d'alimentation en objets d'une portion amont de chaque canal d'accumulation,
- chaque canal d'accumulation étant doté, à une extrémité aval de ce dernier, d'un dispositif de retenue/libération des objets qu'il contient, ce dispositif de retenue/libération étant transparent au courant hydraulique circulant dans le canal d'accumulation,
- chaque canal d'accumulation présentant un fond et des parois latérales et, au moins dans une portion aval de ce dernier, dite zone de superposition, une hauteur supérieure à deux fois l'encombrement vertical maximum de chaque objet de façon à pouvoir recevoir des objets superposés,
- chaque canal d'accumulation comprenant un ressaut vers le haut du fond du canal d'accumulation adapté pour former une restriction de section transversale du canal d'accumulation ayant pour effet d'accélérer localement la vitesse du courant hydraulique passant au-dessus de ce ressaut, de façon à entraîner une superposition des objets retenus dans la zone de superposition du canal d'accumulation entre ledit ressaut et le dispositif de retenue/libération fermé pour retenir les objets,
caractérisé en ce que :
- ledit ressaut de chaque canal d'accumulation est formé par un dispositif mobile dans ladite zone de superposition,
- chaque canal d'accumulation comporte un dispositif motorisé d'entraînement en déplacement dudit dispositif mobile dans ladite zone de superposition depuis l'extrémité aval du canal d'accumulation vers l'amont.

L'invention s'étend également à un procédé mis en oeuvre par un dispositif de groupage selon l'invention.

L'inventeur a constaté avec surprise qu'un tel déplacement d'un ressaut formant localement une restriction de section transversale (ou col) dans la zone de superposition lors d'étape d'accumulation permet d'obtenir une superposition progressive et homogène des objets dans la zone de superposition, et d'obtenir une superposition des objets en un nombre de couches plus important. Il s'avère en effet que l'effet de superposition produit par cette restriction de section transversale est beaucoup plus important immédiatement à l'aval de cette restriction de section transversale. En conséquence, le déplacement de cette restriction de section transversale vers l'amont du courant hydraulique permet d'arranger les objets en couches superposées progressivement depuis l'extrémité aval de la zone de superposition, vers l'amont au fur et à mesure de l'alimentation des objets dans la zone de superposition en bénéficiant pour chaque objet alimenté dans la zone de superposition de l'effet maximal de superposition produit par cette restriction de section transversale. On réalise ainsi une superposition progressive pouvant être qualifiée de « superposition hydraulique dynamique ».

En outre, cette superposition hydraulique dynamique est obtenue continûment, sans choc des objets les uns contre les autres ou contre des organes mécaniques mobiles, c'est-à-dire sans risque de détérioration des objets eux-mêmes, même lorsque ces derniers sont extrêmement fragiles.

On constate en pratique avec une telle superposition hydraulique dynamique que les objets peuvent être superposés en un nombre de couches supérieur à 2, typiquement de l'ordre de 3 à 4 avec des fruits ou légumes flottants tels que des pommes, ce qui permet de réduire encore de moitié la longueur des canaux d'accumulation par rapport à un dispositif de superposition hydraulique connu susmentionné.

Il est à noter à ce titre que le nombre maximum de couches de superposition pouvant être obtenu avec des objets flottants est limité par la densité relative des objets par rapport au courant hydraulique. L'invention permet de superposer les objets en un nombre de couches correspondant à ce nombre maximum.

Par exemple, si les canaux d'accumulation d'un dispositif antérieur sans superposition des objets doivent présenter une longueur de l'ordre de 12 m, les canaux d'accumulation peuvent présenter une longueur de l'ordre de 6 m avec une superposition hydraulique des objets conforme à EP2931635 et US9694366, et les canaux d'accumulation peuvent présenter une longueur de l'ordre de 3 m avec une superposition hydraulique dynamique conforme à la présente invention.

Ainsi, en particulier, dans certains modes de réalisation d'un procédé de groupage et d'un dispositif de groupage selon l'invention la hauteur du canal d'accumulation dans la zone de superposition est choisie en fonction du nombre de couches d'objets superposés dans la zone de superposition et de la dimension maximum de chaque objet. Ainsi, la hauteur du canal d'accumulation dans la zone de superposition est supérieure à deux fois l'encombrement vertical maximum de chaque objet. Dans le cas de fruits ou légumes tels que des pommes, la hauteur du canal d'accumulation dans la zone de superposition est avantageusement comprise entre trois et quatre fois l'encombrement vertical maximum de chaque objet. D'autres valeurs sont possibles.

Le dispositif d'alimentation hydraulique est adapté pour pouvoir former dans chaque canal d'accumulation un courant hydraulique présentant au moins localement au-dessus dudit ressaut une vitesse apte à entraîner une superposition des objets retenus dans la zone de superposition du canal d'accumulation, à l'aval du ressaut contre le dispositif de retenue/libération fermé de façon à retenir les objets. Le ressaut et son déplacement dans la zone de superposition peuvent faire l'objet de très nombreuses variantes de réalisation.

Pour obtenir une accélération locale de la vitesse du courant hydraulique et une superposition des objets à l'aval immédiat du ressaut, il suffit en effet que la restriction de section transversale formée par le ressaut réduise localement la section de passage du courant hydraulique à partir du fond et des parois latérales du canal d'accumulation.

La restriction de section transversale formée par ledit ressaut réduit localement la hauteur de passage du courant hydraulique. Il est possible dans certains modes de réalisation de prévoir que cette restriction de section transversale réduise également localement la largeur de passage du courant hydraulique. Néanmoins, cela n'est en général pas nécessaire, de sorte que dans certains modes de réalisation préférentiels, la restriction de section transversale formée par le ressaut est uniquement une restriction de section verticale, la largeur de passage du courant hydraulique ménagée par le canal d'accumulation au-dessus du ressaut n'étant pas réduite.

Ledit ressaut forme partiellement barrage à l'écoulement du courant hydraulique, ce dernier s'accélérant en passant au-dessus du ressaut pour s'écouler vers l'aval. Ainsi, le ressaut et ladite restriction de section transversale ainsi formée s'étendent toujours sous la surface libre du courant hydraulique et à distance de cette surface libre en ménageant, entre ce ressaut et la surface libre du courant hydraulique, une section de passage du courant hydraulique dans laquelle la vitesse du courant hydraulique est accélérée localement.

Dans certains modes de réalisation préférentiels, la hauteur du ressaut par rapport au fond du canal d'accumulation est inférieure ou égale à la hauteur totale du courant hydraulique alimenté dans le canal d'accumulation, de sorte que ce dernier ne s'élève sensiblement pas au-dessus du ressaut, seule sa vitesse étant augmentée localement.

Dans un procédé et un dispositif selon l'invention, le ressaut forme une restriction de section transversale uniquement localement dans la zone de superposition, c'est-à-dire que la longueur du ressaut (et donc de ladite restriction de section transversale, c'est-à-dire de la zone dans laquelle la vitesse du courant hydraulique est accélérée) est aussi faible que possible de façon à limiter la longueur perdue de la zone de superposition due à la présence du ressaut. Ainsi, la longueur du ressaut est inférieure à la longueur de la zone de superposition, notamment inférieure à la moitié de la longueur de la zone de superposition, en particulier inférieure au quart de la longueur de la zone de superposition, plus particulièrement inférieure au dixième de la longueur de la zone de superposition. Par exemple, typiquement, la longueur du ressaut (et donc de ladite restriction de section transversale, c'est-à-dire de la zone dans laquelle la vitesse du courant hydraulique est accélérée) est inférieure à 1 m, en particulier inférieure à 50 cm, plus particulièrement inférieure à 30 cm, par exemple de l'ordre de 10 cm à 25 cm.

En particulier, dans certains modes de réalisation possibles de l'invention ledit ressaut comprend un pan amont incliné vers le haut vers l'aval.

D'autres formes de réalisation sont possibles, notamment avec une (ou plusieurs) portion(s) présentant une section longitudinale verticale courbe favorisant, à la façon d'un déflecteur courbe, l'accélération locale du courant hydraulique et/ou son orientation vers le bas à l'aval du ressaut et/ou les turbulences à l'aval du ressaut, phénomènes qui peuvent améliorer l'effet d'immersion et de superposition des objets à l'aval du ressaut.

Le déplacement du ressaut dans la zone de superposition le long du canal d'accumulation peut être obtenu de diverses manières. Par exemple, le ressaut peut être formé par au moins une plaque s'étendant au moins horizontalement transversalement dans le courant hydraulique dans le canal d'accumulation, cette plaque étant guidée en translation le long du canal d'accumulation.

Dans certains modes de réalisation conformes à l'invention particulièrement avantageux le ressaut est formé par un chariot déplacé dans le courant hydraulique dans la zone de superposition.

Ainsi, un procédé de groupage selon ces modes de réalisation de l'invention est aussi caractérisé en ce que lors d'une étape d'accumulation d'objets dans un canal d'accumulation, un chariot, dit chariot accélérateur, formant ledit ressaut est déplacé -notamment par un dispositif motorisé d'entraînement- sur le fond du canal d'accumulation dans ladite zone de superposition dans le courant hydraulique depuis l'extrémité aval du canal d'accumulation vers l'amont au fur et à mesure de l'alimentation des objets de façon à entraîner la superposition des objets en plusieurs couches dans la zone de superposition entre ledit chariot accélérateur et le dispositif de retenue/libération fermé pour retenir les objets.

De même, un dispositif de groupage selon ces modes de réalisation de l'invention est aussi caractérisé en ce que ledit ressaut de chaque canal d'accumulation est formé par un chariot, dit chariot accélérateur, mobile le long de ladite zone de superposition, et en ce que ledit dispositif motorisé d'entraînement est adapté pour pouvoir entraîner ledit chariot accélérateur en déplacement sur le fond du canal d'accumulation dans ladite zone de superposition vers l'amont depuis l'extrémité aval du canal d'accumulation. Ainsi, ledit au moins un dispositif mobile est formé par un chariot accélérateur adapté pour pouvoir se déplacer en translation dans et le long de la zone de superposition. Avantageusement et selon l'invention ledit chariot accélérateur est guidé en translation dans la zone de superposition par au moins une partie des parois (parois latérales et/ou fond) du canal d'accumulation.

En outre, le ressaut -notamment tel que formé par le chariot accélérateur- s'étend de préférence, aux jeux près permettant le déplacement du chariot accélérateur le long du canal d'accumulation, sur toute la largeur du canal d'accumulation et à partir du fond du canal d'accumulation. En variante, rien n'empêche de prévoir au moins une section de passage du courant hydraulique entre le fond et le ressaut et/ou au moins une section de passage du courant hydraulique entre le ressaut et au moins une paroi latérale du canal d'accumulation.

Ainsi, selon une variante possible de l'invention, le chariot accélérateur peut être guidé en translation dans le canal d'accumulation uniquement du fait qu'il présente une densité proche de celle du courant hydraulique, de sorte qu'il reste entre deux eaux dans le courant hydraulique et est guidé par les parois (parois latérales et/ou fond) du canal d'accumulation dans la zone de superposition.

Cela étant, dans certains modes de réalisation possibles de l'invention, le chariot est guidé en translation dans le canal d'accumulation par un dispositif de guidage. Tout dispositif de guidage peut être envisagé pour guider le ressaut -notamment le chariot accélérateur- en translation le long du canal d'accumulation dans la zone de superposition. Par exemple, ce dispositif de guidage peut être choisi parmi les dispositifs à organes de roulement le long d'au moins une paroi formant le canal d'accumulation (parois latérales et/ou fond) ; les dispositifs à rail(s) et galet(s) ; les dispositifs à coulisseau(x) dans au moins une glissière ; les dispositifs à patins glissant le long d'au moins une paroi formant le canal d'accumulation (parois latérales et/ou fond) ; et leurs combinaisons. Ce ressaut est guidé dans le courant hydraulique ou au-dessus du courant hydraulique et/ou sur le côté du canal d'accumulation, et est entraîné par un dispositif motorisé tel qu'un moteur ou un actionneur entraînant une vis sans fin ou un tambour d'enroulement d'un câble ou autre.

En particulier, dans certains modes de réalisation possibles de l'invention ledit chariot accélérateur est doté d'organes de roulement sur le fond du canal d'accumulation. En variante ou en combinaison le chariot accélérateur peut être doté d'organes de roulement sur au moins l'une des parois latérales du canal d'accumulation. Ces organes de roulement peuvent être choisis notamment parmi les roues, les rouleaux, les galets.

En outre, dans certains modes de réalisation avantageux de l'invention, ledit chariot accélérateur est doté d'organes de brossage d'au moins une partie des parois du canal d'accumulation. Il peut s'agir en particulier d'organes de brossage au moins du fond du canal d'accumulation. De préférence, le chariot accélérateur est doté d'organes de brossage du fond et/ou des parois latérales du canal d'accumulation sur au moins une partie de leur hauteur. De la sorte, le déplacement du chariot dans le canal d'accumulation a également pour effet et avantage de nettoyer le canal d'accumulation, permettant ainsi de s'affranchir de phases de nettoyage spécifiques.

Par ailleurs, le ressaut peut être entraîné en déplacement par rapport au canal d'accumulation par tout dispositif motorisé d'entraînement approprié, notamment pouvant être choisi parmi au moins un moteur embarqué à bord du dit chariot accélérateur (ce dernier étant alors de type automobile, alimenté en énergie et/ou commandé dans ses déplacements par une liaison sans fil ou au contraire par une liaison filaire) ; au moins un moteur fixé au bâti du canal d'accumulation et agencé pour entraîner au moins un organe menant (câble(s), dispositif à vis sans fin et écrou (vis à billes)...) relié au ressaut. Dans tout le texte, sauf indication contraire, le terme « moteur » et ses dérivés désignent tout dispositif permettant de transformer une énergie quelconque non mécanique en énergie mécanique, et couvrent donc en particulier aussi bien les moteurs rotatifs tels que les moteurs électriques, que les actionneurs tels que les vérins pneumatiques et/ou hydrauliques ou autre.

Dans certains modes de réalisation possibles selon l'invention ledit dispositif motorisé d'entraînement comprend :
- au moins un câble relié audit chariot accélérateur, s'étendant vers l'amont du chariot accélérateur,
- un dispositif motorisé de traction d'au moins un tel câble vers l'amont.

Par exemple, ce dispositif motorisé de traction peut comporter :
- un tambour d'enroulement d'un câble, ce tambour étant monté rotatif autour d'un axe de rotation fixe par rapport à un bâti du canal d'accumulation,
- un moteur accouplé au tambour de façon à pouvoir l'entraîner en rotation au moins dans le sens de l'enroulement du câble sur le tambour.

Le contrôle du déplacement du ressaut lors de chaque étape d'accumulation peut faire l'objet de différentes variantes.

Selon une première variante possible, ce déplacement est commandé à une vitesse de déplacement fixe du ressaut vers l'amont, cette vitesse pouvant être ajustable par l'utilisateur de façon à permettre un réglage initial de l'installation en fonction des objets à traiter. Ainsi, dans cette première variante, l'utilisateur procède à un réglage initial en ajustant la vitesse de déplacement du ressaut -notamment du chariot accélérateur- afin d'optimiser la superposition des objets dans la zone de superposition.

Selon une deuxième variante possible, le déplacement du ressaut est contrôlé de façon entièrement automatique sur commande d'une unité de commande telle qu'un dispositif informatique programmé à cet effet.

En particulier, dans certains modes de réalisation de l'invention lors d'une étape d'accumulation d'objets dans un canal d'accumulation :
- ledit ressaut est maintenu fixe dans le canal d'accumulation tant qu'une quantité d'objets alimentés dans le canal d'accumulation n'est pas atteinte,
- ledit ressaut est déplacé vers l'amont dans le canal d'accumulation lorsque ladite quantité d'objets alimentés dans le canal d'accumulation est atteinte.

Il est à noter que cette quantité d'objets alimentés dans le canal d'accumulation peut être évaluée, détectée ou déterminée de différentes manières, et qu'elle n'est pas nécessairement constituée d'une valeur fixe, mais au contraire qui peut être variable en fonction par exemple du temps et/ou de la position du ressaut dans la zone de superposition.

Ainsi, l'unité de commande peut être adaptée pour contrôler le déplacement du ressaut -notamment du chariot accélérateur- vers l'amont :
- en fonction de la quantité d'objets alimentée dans ladite portion amont du canal d'accumulation (cette quantité pouvant être enregistrée ou déterminée par l'unité de commande, notamment lorsque cette dernière commande également le déchargement sélectif des objets dans les canaux d'accumulation) ;
- en fonction des objets présents immédiatement à l'amont du ressaut et/ou des objets superposés immédiatement à l'aval du ressaut, la détection de ces objets pouvant être réalisée par des capteurs de présence et/ou des dispositifs d'imagerie (caméras) associés à un traitement d'images ;
- si une superposition suffisante des objets est détectée à l'aval du ressaut, de préférence également si la présence d'objets est détectée immédiatement à l'amont du ressaut.

En particulier, selon une variante possible de l'invention, lors d'une étape d'accumulation d'objets dans un canal d'accumulation :
- la présence d'objets dans une zone amont de chaque canal d'accumulation est détectée,
- sur détection de la présence d'objets dans ladite zone amont, ledit ressaut -notamment ledit chariot accélérateur- est déplacé vers l'amont,
- en l'absence de détection d'objets dans ladite zone amont, ledit ressaut -notamment ledit chariot accélérateur- est maintenu fixe dans le canal d'accumulation.

Ainsi, un dispositif selon cette variante de l'invention comprend au moins un capteur de présence d'objets dans une zone amont de chaque canal d'accumulation, chaque capteur de présence étant relié à une unité de commande adaptée pour commander ledit dispositif motorisé d'entraînement de façon à :
- déplacer vers l'amont ledit ressaut -notamment ledit chariot accélérateur- sur détection de la présence d'objets dans ladite zone amont,
- maintenir ladite restriction de section transversale -notamment ledit chariot accélérateur- fixe dans le canal d'accumulation en l'absence de détection d'objets dans ladite zone amont. Plus particulièrement, dans certains modes de réalisation avantageux, ledit capteur de présence est disposé dans une portion amont de ladite zone de superposition, de préférence dans la moitié amont, en particulier aux 3/4 amont de ladite zone de superposition.

Après déplacement dudit ressaut dans la zone de superposition lors d'une étape d'accumulation, le ressaut est replacé vers l'extrémité aval du canal d'accumulation après vidage de ce dernier, ce replacement pouvant être effectué vers l'aval soit selon le même trajet que celui vers l'amont lors de l'étape d'accumulation mais en sens inverse, soit selon un autre trajet, par exemple en extrayant le ressaut hors du courant hydraulique vers le haut.

Cela étant, dans certains modes de réalisation préférentiels de l'invention, le déplacement vers l'aval du ressaut -notamment dudit chariot accélérateur- est réalisé en maintenant le ressaut dans le courant hydraulique et au contact des objets, de façon à repousser les objets vers l'aval. Ainsi, lors d'une étape de vidage d'un canal d'accumulation, le dispositif de retenue/libération est ouvert de façon à permettre l'évacuation des objets entraînés par le courant hydraulique hors du canal d'accumulation, et ledit ressaut -notamment ledit chariot accélérateur- est déplacé dans ladite zone de superposition vers l'extrémité aval du canal d'accumulation en repoussant les objets hors du canal d'accumulation. En outre, avantageusement lors d'une étape de vidage ledit ressaut -notamment ledit chariot accélérateur- est déplacé vers l'extrémité aval du canal d'accumulation sous l'effet du courant hydraulique -notamment exclusivement sous l'effet du courant hydraulique-.

Ainsi, dans un dispositif de groupage selon ces modes de réalisation de l'invention ledit dispositif motorisé d'entraînement est adapté pour permettre un déplacement dudit dispositif mobile -notamment dudit chariot accélérateur- dans ladite zone de superposition vers l'extrémité aval du canal d'accumulation. Lors de ce déplacement vers l'aval, ledit dispositif mobile - notamment ledit chariot accélérateur- repousse les objets hors du canal d'accumulation, le dispositif de retenue/libération étant ouvert. En outre, avantageusement le dispositif de groupage selon ces modes de réalisation de l'invention est aussi caractérisé en ce que chaque dispositif mobile -notamment ledit chariot accélérateur- est adapté pour pouvoir être entraîné vers l'aval sous l'effet - notamment exclusivement sous l'effet- du courant hydraulique circulant dans le canal d'accumulation et en ce que ledit dispositif motorisé d'entraînement comprend un dispositif de débrayage apte, en position débrayée, à laisser chaque dispositif mobile -notamment ledit chariot accélérateur- libre en déplacement vers l'aval dans le canal d'accumulation. En variante, rien n'empêche de prévoir que ledit dispositif motorisé d'entraînement soit adapté pour pouvoir entraîner chaque dispositif mobile -notamment le chariot accélérateur- en déplacement vers l'aval.

Dans un procédé et un dispositif de groupage selon l'invention, la vitesse d'alimentation du courant hydraulique à l'amont de chaque canal d'accumulation est aussi ajustée pour permettre, compte tenu de l'accélération locale générée par le ressaut, une superposition optimale des objets à l'aval du ressaut.

L'ajustement de la vitesse du courant hydraulique pour entraîner cette superposition des objets peut faire l'objet de différentes variantes. Il est possible par exemple de maintenir la vitesse du courant hydraulique en permanence à une valeur constante et unique susceptible d'entraîner une superposition des objets. Il est aussi possible de compter les objets (ou le poids total des objets) introduits dans chaque canal d'accumulation, et d'ajuster la vitesse du courant hydraulique à une valeur susceptible d'entraîner une superposition des objets dans un canal d'accumulation après avoir alimenté ce canal d'accumulation avec un nombre (ou un poids) minimum prédéterminé d'objets. Il est également possible de détecter (par exemple avec des cellules photoélectriques) la hauteur occupée par les objets dans le canal d'accumulation en un ou plusieurs points le long de ce dernier et d'ajuster la vitesse du courant hydraulique à une valeur susceptible d'entraîner une superposition des objets lorsque cette hauteur correspond à une couche d'objets. L'ajustement des différentes vitesses du courant hydraulique peut être fait de façon discrète, c'est-à-dire en sélectionnant une valeur de vitesse parmi une pluralité de valeurs prédéterminées ; ou au contraire de façon continue en augmentant continûment la vitesse du courant hydraulique jusqu'à ce qu'elle atteigne une valeur à partir de laquelle une superposition des objets est détectée en au moins une zone prédéterminée du canal d'accumulation.

Par exemple la vitesse du courant hydraulique est ajustée à une première valeur tant que le nombre d'objets introduits dans un canal d'accumulation est inférieur ou égal à un premier nombre correspondant à une première couche d'objets dans ce canal d'accumulation ; puis la vitesse du courant hydraulique est ajustée à au moins une deuxième valeur entraînant une superposition des objets en plusieurs couches à l'aval du ressaut lorsque le nombre d'objets introduits dans le canal d'accumulation dépasse le premier nombre.

Avantageusement, dans une variante avantageuse d'un procédé selon l'invention, lors d'une étape d'accumulation :
- la présence d'objets dans une zone amont de chaque canal d'accumulation est détectée,
- en l'absence de détection d'objets dans ladite zone amont, une première valeur de vitesse est impartie au courant hydraulique à l'aval de ladite zone amont dans le canal d'alimentation,
- sur détection de la présence d'objets dans ladite zone amont, une deuxième valeur de vitesse est impartie au courant hydraulique à l'aval de ladite zone amont dans le canal d'alimentation, cette deuxième valeur étant supérieure à la dite première valeur et apte à entraîner une superposition des objets à l'aval du ressaut dans la zone de superposition du canal d'accumulation le dispositif de retenue/libération étant fermé de façon à retenir les objets.

Ladite première valeur de vitesse est avantageusement adaptée pour permettre l'alimentation en objets de la zone de superposition et l'accumulation d'objets dans la zone de superposition, en évitant toute détérioration des objets sous l'effet de chocs des objets sur le dispositif de retenue/libération et entre eux. Ainsi, dans un procédé selon l'invention, la vitesse du courant hydraulique est initialement ajustée à une première valeur relativement faible suffisante pour commencer à alimenter le canal hydraulique en objets en minimisant les chocs des objets les uns contre les autres lors de cette alimentation initiale qui a pour effet de former une première couche d'objets flottants à la surface du courant hydraulique dans le canal d'accumulation. Cette première valeur de vitesse du courant hydraulique n'est par contre pas nécessairement suffisante pour entraîner elle-même une superposition hydraulique des produits. Lorsque des objets sont détectés dans ladite zone amont, c'est-à-dire lorsqu'une première couche d'objets est réalisée, ce risque de choc n'existe plus, et il est alors possible d'augmenter la vitesse du courant hydraulique à une deuxième valeur suffisante pendant au moins une certaine durée pour entraîner alors une superposition hydraulique des objets dans la zone de superposition. Simultanément, le déplacement du ressaut vers l'amont est commandé au fur et à mesure de l'alimentation des objets.

Avantageusement et selon l'invention, la vitesse du courant hydraulique formé dans chaque canal d'accumulation est ajustée par réglage du débit de liquide délivré dans une entrée amont du canal d'accumulation. Ce réglage de débit peut lui-même être effectué à l'aide d'une simple vanne papillon, par ajustement du débit délivré par une pompe à l'amont de chaque canal d'accumulation, ou autre.

En outre, avantageusement et selon l'invention, la vitesse du courant hydraulique est maintenue à la dite deuxième valeur et le ressaut est déplacé vers l'amont pendant une durée prédéterminée après détection de la présence d'objets à ladite zone amont. Avantageusement et selon l'invention cette durée est déterminée pour assurer que la superposition des objets dans la zone de superposition ait pour effet de repousser tous les objets vers l'aval au-delà du ressaut, de préférence immédiatement à l'aval du ressaut qui est simultanément déplacé vers l'amont. Autrement dit, ladite durée pendant laquelle la vitesse du courant hydraulique est ajustée à la deuxième valeur entraînant la superposition des objets est choisie de telle sorte que le front amont des objets accumulés dans la zone de superposition est situé à l'aval -notamment immédiatement à l'aval- du ressaut.

À la fin de ladite durée prédéterminée, si la présence d'objets dans ladite zone amont n'est plus détectée, la vitesse du courant hydraulique est ramenée à ladite première valeur adaptée pour l'alimentation en objets du canal d'accumulation dans des conditions optimales, et le ressaut est maintenu immobile. Les objets continuant à être alimentés dans le canal d'accumulation s'accumulent les uns contre les autres vers l'amont à partir de ce front amont, au-dessus du ressaut, jusqu'à ce que la présence d'objets soit à nouveau détectée dans ladite zone amont. Le procédé est alors réitéré en déplaçant le ressaut vers l'amont et en ajustant la vitesse du courant hydraulique à ladite deuxième valeur pour réaliser à nouveau une superposition d'objets qui sont repoussés vers le dispositif de retenue/libération fermé.

Avantageusement et selon l'invention, ladite première valeur de la vitesse ainsi que la restriction de section formée par le ressaut sont aussi choisies de telle sorte que les objets se superposent en s'étendant depuis l'aval du ressaut jusqu'au dispositif de retenue/libération fermé sans avoir tendance à s'étaler de nouveau en un moindre taux de superposition.

L'ensemble du procédé selon l'invention peut être mis en oeuvre de façon automatique à l'aide d'une unité de commande pilotant le déplacement du ressaut -notamment du chariot accélérateur- et un actionneur de vanne à l'entrée d'alimentation hydraulique de chaque canal d'accumulation.

Chaque vanne de canal et/ou ladite unité de commande peuvent être adaptées pour permettre un ajustement de la vanne de canal selon une seule première position correspondant à une seule première valeur de vitesse, ou au contraire selon plusieurs positions pouvant être qualifiées de première position, c'est-à-dire permettant un ajustement de la vitesse du courant hydraulique à une valeur pouvant être qualifiée de première valeur (adaptée pour permettre l'alimentation initiale en objets de la zone de superposition et l'accumulation d'objets dans la zone de superposition en une première couche). De même, chaque vanne de canal et/ou ladite unité de commande peuvent être adaptées pour permettre un ajustement de la vanne de canal selon une seule deuxième position correspondant à une seule deuxième valeur de vitesse, ou au contraire selon plusieurs positions pouvant être qualifiées de deuxième position, c'est-à-dire entraînant une superposition hydraulique des objets dans la zone de superposition.

Avantageusement et selon l'invention, chaque vanne de canal est adaptée pour permettre un ajustement du débit du courant hydraulique dans le canal d'accumulation en fonction de ladite position de cette vanne de canal. Chaque vanne de canal peut aussi bien être une vanne proportionnelle, par exemple une vanne papillon, ou, une vanne tout ou rien (clapet, soupape...).

L'invention s'applique à un dispositif comprenant un seul canal d'accumulation. Néanmoins, elle s'applique avantageusement à un dispositif qui est aussi caractérisé en ce que :
- il comporte une pluralité de canaux d'accumulation,
- ledit dispositif d'alimentation en objets est un dispositif d'alimentation sélective comprenant au moins une ligne, dite ligne de calibrage, de convoyage, d'analyse et de tri des objets en fonction de critères prédéterminés, ladite ligne de calibrage comprenant des moyens de déchargement sélectif des objets dans les différents canaux d'accumulation.

Par ailleurs, avantageusement et selon l'invention, le dispositif de retenue/libération de chaque canal d'accumulation est transparent au courant hydraulique circulant dans le canal d'accumulation, y compris lorsque ce dispositif de retenue/libération est en position fermée de retenue des objets dans la zone de superposition.

Dans un mode de réalisation avantageux un dispositif selon l'invention comprend en outre un canal hydraulique, dit canal de collecte, à l'aval et en communication avec chaque canal d'accumulation de façon à pouvoir recevoir le courant hydraulique et des objets évacués par le dispositif de retenue/libération à l'état ouvert, au moins un poste de réception de lots d'objets délivrés par ledit canal de collecte, et un circuit de recirculation (notamment comportant au moins une pompe de recirculation) du courant hydraulique entre chaque poste de réception de lots d'objets et ledit dispositif d'alimentation hydraulique de chaque canal d'accumulation.

Un dispositif de groupage selon l'invention est par exemple applicable à titre d'unité de calibrage de fruits ou légumes, par exemple de pommes ou de poires, le poste de réception permettant de conditionner chaque lot d'objets issus d'un canal d'accumulation dans un même emballage, par exemple une caisse à claire-voie et/ou une caisse-palette généralement désignée "palox", tel que décrit par exemple par FR 2868042 ou US 7159373. En variante, le poste de réception peut être adapté pour transférer chaque lot vers un dispositif de conditionnement individuel ou par groupes des objets du lot.

L'invention permet de rendre un dispositif de groupage particulièrement compact, et ce de façon extrêmement simple et efficace. Elle est tout particulièrement avantageuse dans le cas d'un dispositif de groupage selon l'invention caractérisé en outre en ce que les différents canaux d'accumulation sont parallèles les uns aux autres et en ce que chaque ligne de calibrage du dispositif d'alimentation sélective est au moins sensiblement orthogonal à chaque canal d'accumulation.

D'autres buts, caractéristiques et avantages de l'invention apparaîtront à la lecture de la description suivante donnée à titre non limitatif de certains modes de réalisation possibles de l'invention et qui se réfère aux figures annexées dans lesquelles :

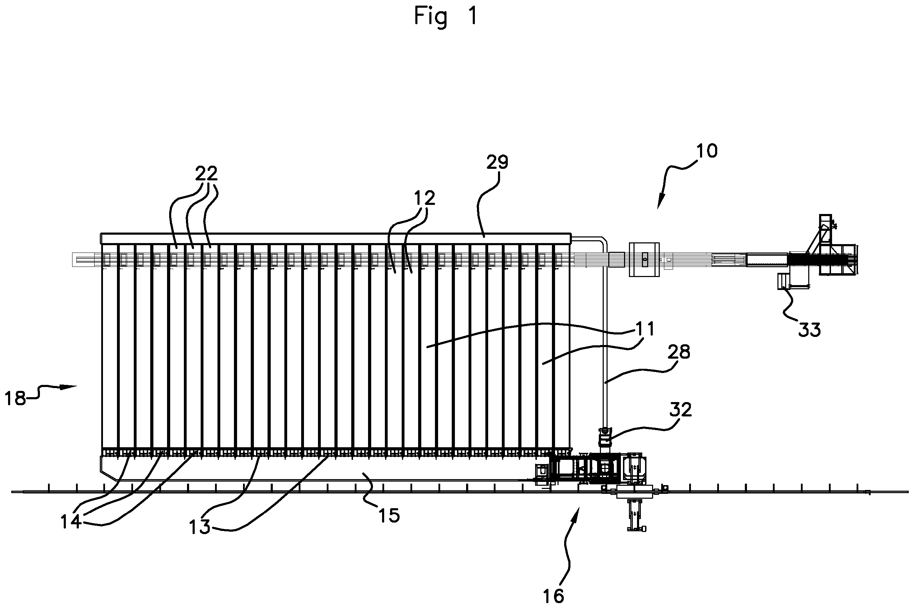

- la figure 1 est une vue schématique de dessus d'un dispositif de groupage conforme à l'invention,

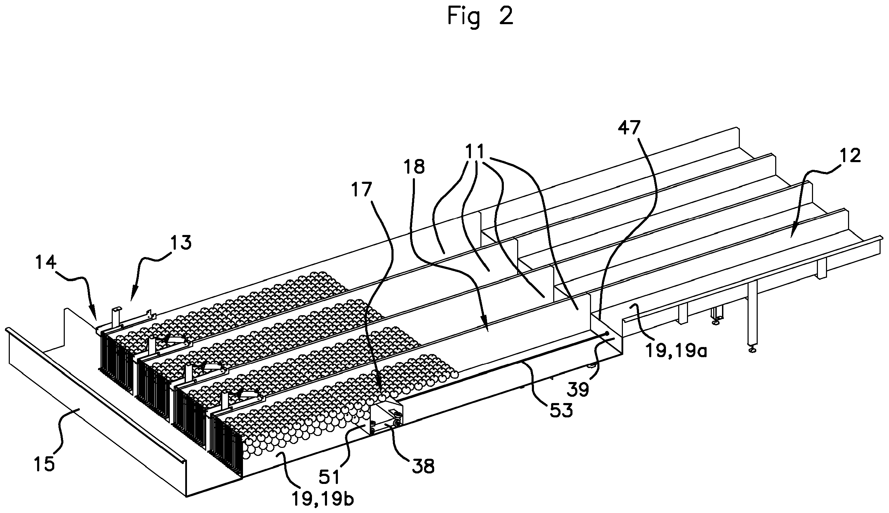

- la figure 2 est un schéma en perspective partielle avec arraché d'un mode de réalisation possible d'un dispositif de groupage selon l'invention,
- les figures 3 à 6 sont des vues schématiques en coupe verticale longitudinale d'un canal d'accumulation d'un dispositif de groupage selon l'invention, illustrant différentes étapes d'un procédé de groupage selon l'invention,

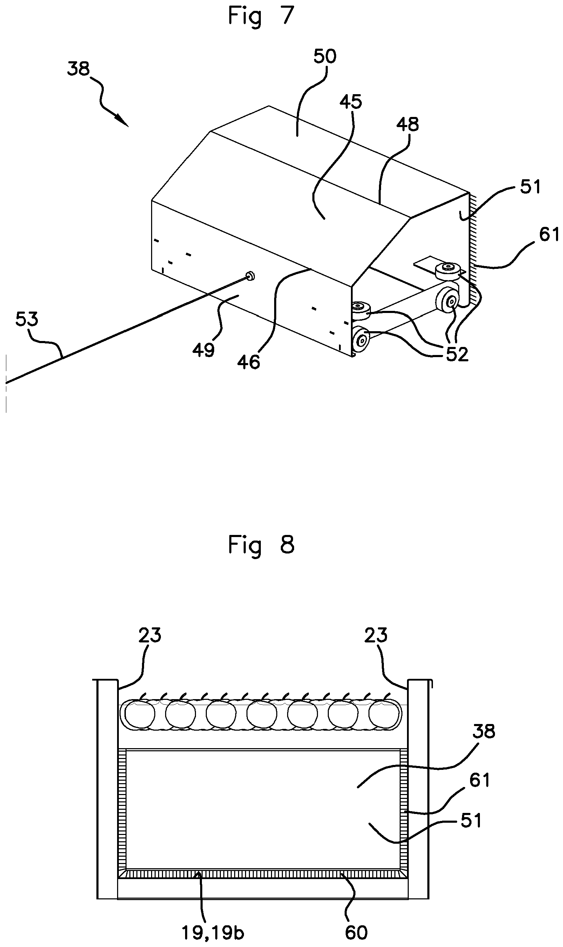

- la figure 7 est une vue schématique en perspective d'un chariot accélérateur d'un dispositif de groupage selon l'invention,
- la figure 8 est une vue en coupe verticale transversale d'un canal d'accumulation à l'aval d'un chariot accélérateur d'un dispositif de groupage selon l'invention,
- la figure 9 est une vue schématique d'un logigramme d'un exemple de procédé de commande des déplacements vers l'amont d'un chariot accélérateur dans un procédé de groupage selon l'invention.

Le dispositif selon l'invention représenté sur les figures comprend une ligne 10 de convoyage, d'analyse et de tri des objets en fonction de critères prédéterminés, cette ligne 10, dite ligne 10 de calibrage, étant dotée de moyens de déchargement sélectif (non représentés) des objets dans différents canaux d'accumulation 11 qui s'étendent globalement orthogonalement à la ligne 10 de calibrage, avec une portion d'extrémité amont 12 située sous les moyens de déchargement de la ligne 10 de calibrage. Une telle ligne 10 de calibrage est bien connue en elle-même (cf. par exemple notamment EP 0729908, US 7159373, US 5230394, US 5280838, US 5626238, US 6234297...). Elle présente en général différents postes d'analyse des objets (pesage, analyse optique,...). Un tel dispositif peut comprendre un nombre quelconque -par exemple de 5 à 50- canaux 11 d'accumulation parallèles les uns aux autres et qui se jouxtent latéralement.

De préférence, chaque canal 11 d'accumulation est adapté pour pouvoir recevoir un lot d'objets flottants destiné à remplir une unique caisse ou palox, au niveau d'un poste de réception 16 alimenté par le canal 15 de collecte. Néanmoins, cela n'est pas nécessaire et il reste possible que chaque lot d'objets contenu dans un canal d'accumulation et libéré dans le canal 15 de collecte fasse l'objet d'un autre traitement au niveau du poste de réception 16 ou de plusieurs postes de réception. Quoi qu'il en soit, chaque canal 11 d'accumulation présente une longueur suffisante pour pouvoir recevoir tous les objets d'un même lot, devant faire l'objet d'un même traitement ultérieur. En pratique, chaque canal 11 d'accumulation reçoit des objets présentant des caractéristiques spécifiques vis-à-vis des critères de sélection, par exemple un calibre prédéterminé lorsque les objets sont des fruits. Dans un même lot, tous les objets présentent donc les mêmes caractéristiques, notamment le même calibre.

Les canaux 11 d'accumulation sont alimentés et parcourus par un courant hydraulique (en général de l'eau, éventuellement avec des additifs de traitement) généré par un dispositif d'alimentation hydraulique doté de moyens de pompage et de recirculation, tel que décrit dans ses caractéristiques générales par exemple par US 7159373. Le courant hydraulique formé dans chaque canal 11 d'accumulation est adapté pour pouvoir assurer le transport des objets flottants dans le courant hydraulique, ce dernier présentant une surface supérieure libre.

Le dispositif d'alimentation hydraulique comprend en particulier une conduite 29 d'alimentation s'étendant le long de toutes les extrémités 22 amont des canaux 11 d'accumulation recevant le flux hydraulique généré par une pompe 32 de recirculation elle-même reliée à au moins un poste 16 de réception et à une conduite 28 de recirculation du courant hydraulique en circuit fermé.

Le dispositif d'alimentation hydraulique de chaque canal 11 d'accumulation comprend une vanne commandée, dite vanne 30 de canal, à l'extrémité 22 amont de chaque canal 11 d'accumulation. Cette vanne 30 de canal est dotée d'un organe 31 mobile tel qu'un papillon permettant de régler le débit du courant hydraulique alimentant le canal 11 d'accumulation. L'organe 31 mobile est contrôlé en position et déplacé par un actionneur tel qu'un vérin 34 lui-même relié à une unité 33 de commande de l'installation comme décrit ci-après. Dans l'exemple représenté, le papillon 31 de la vanne 30 de canal est monté rotatif autour d'un axe horizontal et est commandé dans son pivotement par le vérin 34 par l'intermédiaire d'une biellette.

Le courant hydraulique circule dans les canaux 11 d'accumulation, depuis leur portion amont 12 s'étendant sous les moyens de déchargement de la ligne 10 de calibrage, jusqu'à leur extrémité 13 aval opposée dotée d'un dispositif 14 de retenue/libération permettant, en une position fermée, de retenir les objets dans le canal d'accumulation tout en laissant passer le courant hydraulique, et, en position ouverte, de les libérer sous l'effet du courant hydraulique pour les transférer dans un canal 15 de collecte situé à l'aval de tous les canaux 11 d'accumulation. Ce dispositif 14 de retenue/libération peut être formé d'une simple grille mobile, comme décrit par exemple par WO 2012056186.

Chaque canal 11 d'accumulation est globalement formé d'un profilé comprenant un fond 19 horizontal longitudinal, et deux parois latérales verticales 23.

L'invention permet de réaliser, dans chaque canal 11 d'accumulation une superposition des objets en plusieurs couches dans le courant hydraulique du canal 11 d'accumulation, et ce dans une portion du canal d'accumulation, dite zone 18 de superposition, qui est située à l'aval de ladite portion amont 12 du canal 11 d'accumulation. Cette zone 18 de superposition doit présenter une longueur aussi grande que possible vis-à-vis de la longueur totale du canal 11 d'accumulation entre sa portion amont 12 et son extrémité aval 13.

Dans l'exemple représenté, le fond 19 du canal 11 d'accumulation est, dans la zone 18 de superposition, globalement horizontal et les parois latérales verticales 23 sont de hauteur uniforme sur toute la longueur de la zone 18 de superposition du canal 11 d'accumulation. Rien n'empêche cependant de prévoir que le canal 11 d'accumulation présente une hauteur variable, de préférence augmentant vers l'aval, notamment dans la zone 18 de superposition pour faciliter la superposition des objets dans cette zone 18 de superposition.

Quoi qu'il en soit, au moins dans la zone 18 de superposition, la hauteur totale du canal 11 d'accumulation est supérieure à deux fois l'encombrement vertical maximum de chaque objet de façon à pouvoir recevoir des objets superposés. De préférence, la hauteur totale du canal 11 d'accumulation est supérieure à quatre fois l'encombrement vertical maximum de chaque objet, et est adaptée pour permettre la superposition verticale d'au moins quatre objets l'un au-dessus de l'autre dans le courant hydraulique formé dans le canal 11 d'accumulation, de préférence avec un jeu entre les objets formant la couche la plus basse dans le courant hydraulique, et le fond 19, de façon à éviter le contact des objets avec le fond 19 et à permettre une libre circulation du courant hydraulique dans le canal 11 d'accumulation.

Plus exactement, la hauteur totale du canal 11 d'accumulation est, au moins dans la zone 18 de superposition, adaptée pour permettre la superposition des objets les uns au-dessus des autres dans le courant hydraulique, selon le nombre de couches d'objets souhaité dans cette zone 18 de superposition, et ce avec un jeu suffisant maintenu entre les objets et le fond 19. Ainsi, si l'on souhaite former au moins quatre couches, la hauteur du courant hydraulique formé dans le canal 11 d'accumulation doit être suffisante pour pouvoir recevoir ces quatre couches dans le courant hydraulique, avec un jeu tel que susmentionné. Il est à noter que dans la zone 18 de superposition, les objets flottants tels que des fruits ne se superposent pas nécessairement strictement selon des couches uniformes et homogènes, mais au contraire s'imbriquent les uns dans les autres plus ou moins partiellement, certains des objets étant repoussés vers le bas pour une immersion plus importante, d'autres étant éventuellement repoussés le haut et se trouvant moins immergés.

Dans la portion amont 12 de chaque canal 11 d'accumulation située sous la ligne 10 de calibrage, et immédiatement à l'aval de cette dernière, la hauteur du canal 11 d'accumulation doit être suffisante pour pouvoir recevoir une couche d'objets, avec un jeu suffisant avec le fond 19 comme indiqué ci-dessus. En effet, dans cette portion amont 12, les objets ne sont pas superposés. Ainsi, chaque canal 11 d'accumulation comprend ladite portion amont 12 dans laquelle le fond 19a du canal 11 d'accumulation est globalement horizontal à un premier niveau horizontal, cette portion amont 12 étant prolongée vers l'aval par ladite zone 18 de superposition dans laquelle le fond 19b du canal 11 d'accumulation est globalement horizontal mais à un deuxième niveau horizontal plus bas que le premier niveau horizontal, le fond 19a de ladite portion amont 12 étant relié au fond 19b de la zone 18 de superposition par une paroi verticale 39 formant un décrochement vers le bas vers l'aval, cette paroi verticale 39 formant une paroi amont transversale de la zone 18 de superposition.

De préférence, les parois latérales verticales 23 présentent un bord 37 supérieur également globalement horizontal sur toute la longueur du canal 11 d'accumulation, c'est-à-dire le long de ladite portion amont 12 et de la zone 18 de superposition.

La zone 18 de superposition de chaque canal 11 d'accumulation est dotée d'un chariot, dit chariot 38 accélérateur, formant un ressaut 17 par rapport au fond 19 du canal 11 d'accumulation, ce ressaut 17 formant une restriction de section ayant pour effet d'accélérer localement la vitesse du courant hydraulique passant au-dessus du ressaut 17, par rapport à la vitesse du courant hydraulique au niveau de ladite portion amont 12 d'alimentation en objets et par rapport à la vitesse du courant hydraulique dans la zone 18 de superposition à l'aval du ressaut 17 et du chariot 38 accélérateur. Le ressaut 17 s'étend, aux jeux près permettant le déplacement du chariot 38 accélérateur le long du canal 11 d'accumulation, sur toute la largeur du canal 11 d'accumulation.

Dans le mode de réalisation représenté, le ressaut 17 comprend, de l'amont vers l'aval :
- un pan 45 incliné vers le haut présentant :
   o un bord 46 inférieur amont situé à un niveau inférieur au niveau du bord supérieur 47 de la paroi 39 transversale d'extrémité amont de la zone 18 de superposition,
   o et un bord 48 supérieur aval situé :
      ▪ à un niveau supérieur au niveau du bord supérieur 47 de la paroi 39 transversale d'extrémité amont de la zone 18 de superposition,
      ▪ mais sous la surface libre du courant hydraulique s'écoulant dans le canal 11 d'accumulation,
- un pan 50 horizontal,
- un pan 51 vertical.

Le pan 45 incliné et le pan 50 horizontal permettent de produire l'accélération locale de vitesse du courant hydraulique au-dessus du pan 50 horizontal. Le pan 51 vertical a pour effet d'orienter brusquement le courant hydraulique vers le bas à l'aval du pan 50 horizontal et/ou de produire des turbulences, ce qui a pour effet de favoriser l'immersion des objets et leur superposition immédiatement à l'aval ressaut 17. Cela étant, les formes du ressaut 17 peuvent être différentes, et en particulier optimisées pour favoriser encore plus ces phénomènes. Par exemple, le pan 51 vertical peut être remplacé ou complété par un déflecteur courbe s'étendant à partir du bord aval du pan 50 horizontal.

Le ressaut 17 forme une surélévation par rapport au niveau du fond 19b de la zone 18 de superposition pour accélérer localement la vitesse du courant hydraulique dans la zone 18 de superposition. De préférence, le ressaut 17 forme également une surélévation par rapport au niveau du fond 19a de ladite portion amont 12 de façon également à accélérer localement la vitesse du courant hydraulique lorsque le chariot 38 accélérateur se trouve à l'extrémité amont de la zone 18 de superposition, immédiatement à l'aval de la portion amont 12. Cela étant, le ressaut 17 est adapté pour se trouver toujours sous la surface libre du courant hydraulique tel qu'il est formé et alimenté dans le canal 11 d'accumulation à son extrémité 22 amont, le courant hydraulique passant au-dessus du ressaut 17 en s'accélérant mais sensiblement sans lui-même remonter au-dessus du ressaut 17.

De préférence, le liquide est refoulé à partir de la conduite 29 d'alimentation, qui s'étend à un niveau inférieur à celui des canaux 11 d'accumulation, verticalement vers le haut à travers chaque vanne 30 de canal pour déboucher à l'extrémité 22 amont du canal 11 d'accumulation qui, à cette extrémité, peut présenter un fond horizontal ou incliné vers le bas et vers l'aval jusqu'à former ladite portion amont 12 d'alimentation en objets par la ligne 10 de calibrage. La hauteur du courant hydraulique dans cette portion amont 12 n'est pas nécessairement la même que celle dans la zone 18 de superposition, et notamment peut être plus faible, par exemple de l'ordre de 200 mm.

De préférence, l'ensemble du dispositif est adapté pour que la surface libre du courant hydraulique reste au moins sensiblement au même niveau horizontal tout le long du canal 11 d'accumulation (avec éventuellement une légère descente permettant de favoriser l'écoulement vers l'aval, cette légère descente correspondant à une légère inclinaison vers le bas et vers l'aval du fond 19b du canal 11 d'accumulation dans la zone 18 de superposition). De la sorte, le ressaut 17 a pour effet de favoriser la superposition des objets immédiatement à l'aval de ce ressaut 17, sans pour autant entraîner des chocs intempestifs des objets entre eux.

La hauteur du ressaut 17 est adaptée pour que la vitesse du courant hydraulique localement au-dessus du ressaut 17 et dans une zone d'accélération s'étendant légèrement en amont et en aval de ce ressaut 17, soit plus importante que celle du courant hydraulique alimenté à l'amont du canal 11 d'accumulation. L'accélération de la vitesse formée par le ressaut 17 produits une superposition des objets et maintient l'état de superposition des objets. La hauteur du ressaut 17 est en particulier déterminée de façon à optimiser la superposition des objets lorsque la vitesse du courant hydraulique alimenté à l'amont du canal 11 d'accumulation correspond à une vitesse de superposition Vmax. Un tel ressaut 17 a pour effet d'accélérer localement cette vitesse de superposition du courant hydraulique d'une valeur importante, typiquement de l'ordre de 50 % ou plus.

Ainsi, par exemple, alors que la hauteur du courant hydraulique formé dans la portion amont 12 du canal 11 d'accumulation est par exemple de l'ordre de 100 mm à 150 mm, ce même courant hydraulique présente une hauteur de l'ordre de 50 mm à 100 mm -notamment de l'ordre de 80 mm- à l'aplomb et au-dessus du ressaut 17. La hauteur du courant hydraulique dans la zone 18 de superposition est par exemple comprise entre 300 mm et 600 mm, par exemple de l'ordre de 350 mm.

Par exemple, si la hauteur du courant hydraulique au-dessus du ressaut 17 est de l'ordre de 80 mm, alors qu'elle est de l'ordre de 350 mm dans la zone 18 de superposition, lorsque la vitesse d'accumulation du courant hydraulique est de l'ordre de 6 m/min dans la zone 18 de superposition, la vitesse locale est de 30 m/min à 40 m/min au-dessus du ressaut 17, soit une augmentation de plus de 500 %.

Le chariot 38 accélérateur formant le ressaut 17 est doté de roues 52 montées libres en rotation sur le chariot 38 accélérateur autour d'axes horizontaux transversaux permettant son déplacement sur le fond 19b de la zone 18 de superposition entre la grille du dispositif 14 de retenue/libération et la paroi 39 verticale transversale amont.

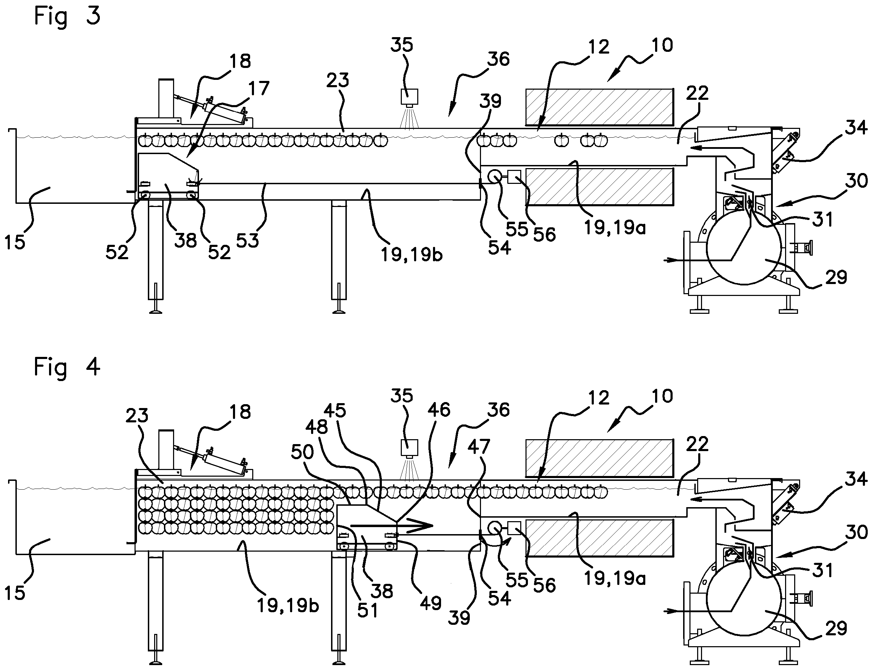

Le chariot 38 accélérateur présente également une paroi 49 transversale verticale amont s'étendant sous le pan 45 incliné. Un câble 53 de traction est fixé au chariot 38, par exemple à sa paroi 49 amont. Ce câble 53 de traction s'étend horizontalement vers l'amont jusqu'à la paroi 39 verticale transversale d'extrémité amont de la zone 18 de superposition, qu'il traverse par l'intermédiaire d'une traversée 54 étanche, pour s'enrouler sur un tambour 55 disposé sous le fond 19a de la portion amont 12 du canal 11 d'accumulation, en dehors du courant hydraulique. Cette traversée 54 étanche peut être obtenue par le fait que le câble 53 soit formé d'un fil lisse traversant un orifice calibré de la paroi 39 verticale, cet orifice étant éventuellement doté d'un joint d'étanchéité. Ce tambour 55 est relié à un moteur 56 d'entraînement par un accouplement permettant l'entraînement en rotation du tambour 55 par le moteur 56 au moins dans le sens d'enroulement du câble 53 de traction autour du tambour 55. Lorsque le moteur 56 d'entraînement est activé pour entraîner le tambour 55 dans le sens de l'enroulement du câble 53 de traction autour du tambour 55, le chariot 38 accélérateur est déplacé vers l'amont dans la zone 18 de superposition comme représenté figure 4.

Par ailleurs, le chariot 38 accélérateur est avantageusement doté d'organes 60, 61 de brossage des parois du canal 11 d'accumulation, par exemple sous la forme d'au moins une brosse 60 transversale inférieure agencée pour brosser le fond 19 de la zone 18 de superposition et d'au moins une paire de brosse 61 latérale verticales agencées pour brosser les parois latérales 23 de la zone 18 de superposition.

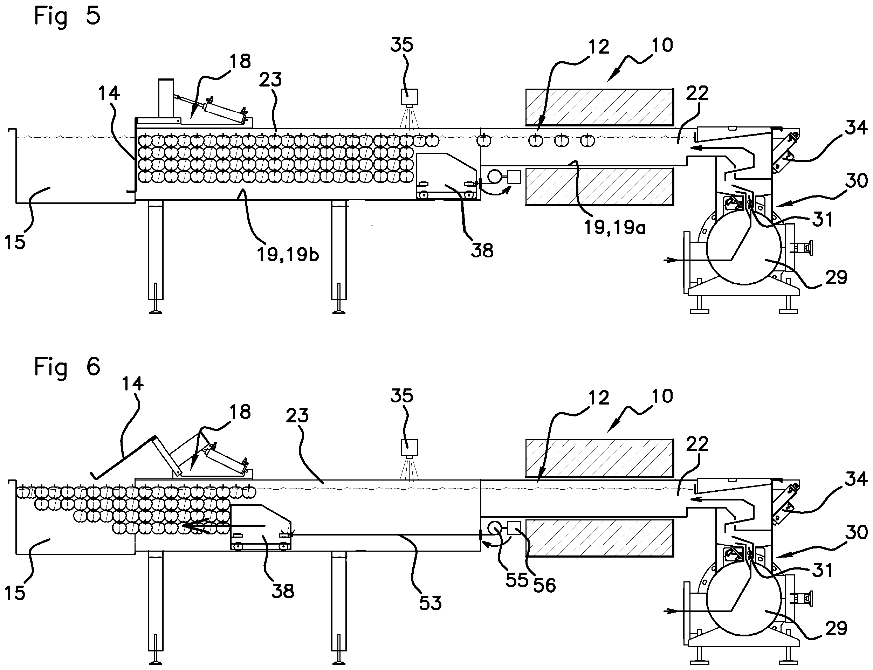

Le moteur 56 d'entraînement est avantageusement doté d'un débrayage. Lorsque ce débrayage est activé, le tambour 55 est libre de tourner dans le sens d'un déroulement du câble 53 de traction. Si la grille du dispositif 14 de retenue/libération est relevée (figure 6) le chariot 38 accélérateur est alors entraîné vers l'aval sous l'effet du courant hydraulique, repoussant les objets dans le canal 15 de collecte. Le vidage du canal 11 d'accumulation est ainsi grandement accéléré.

L'ensemble du dispositif de groupage selon l'invention est piloté par une unité 33 de commande (automate), en général formée d'un système informatique, adaptée pour commander les différents actionneurs et moteurs de l'ensemble de l'installation, notamment la ligne 10 de calibrage, les moyens de déchargement, les dispositifs 14 de retenue/libération des canaux 11 d'accumulation, le poste 16 de réception, le dispositif d'alimentation hydraulique et en particulier chaque vanne 30 de canal et son vérin 34 associé, les moteurs 56 d'entraînement des chariots 38 accélérateur... Cette unité 33 de commande reçoit aussi différents signaux issus de différents capteurs ou détecteurs du dispositif.

L'unité 33 de commande peut être programmée pour déplacer le chariot 38 accélérateur dans la zone 18 de superposition selon de nombreuses variantes différentes en fonction des besoins de l'application et de la nature des objets concernés.

Selon certaines variantes possibles, l'unité 33 de commande peut être programmée pour déplacer le chariot 38 accélérateur selon un cycle prédéterminé de déplacement, par exemple continûment à vitesse constante prédéterminée ou par sauts successifs prédéterminés depuis l'extrémité 13 aval de la zone 18 de superposition jusqu'à la paroi 39 verticale transversale amont de la zone 18 de superposition. Chaque cycle prédéterminé peut être caractérisé par des commandes en position et/ou en vitesse et/ou en accélération du chariot 38 accélérateur.

Selon d'autres variantes possibles qui peuvent être combinées aux précédentes, l'unité 33 de commande est programmée pour commander le déplacement du chariot 38 accélérateur en fonction de signaux délivrés par au moins un dispositif de détection tel qu'au moins un capteur de détection de présence et/ou au moins une caméra... En particulier, l'unité de commande peut être adaptée pour contrôler le déplacement du chariot 38 accélérateur selon un asservissement permettant d'optimiser la superposition des objets à l'aval du chariot 38 accélérateur.

Selon d'autres variantes possibles qui peuvent être combinées aux précédentes, unité 33 de commande est programmée pour commander le déplacement du chariot 38 accélérateur en fonction d'au moins un paramètre représentatif de la quantité d'objets délivrés dans le canal 11 d'accumulation par la ligne 10 de calibrage, par exemple en fonction du nombre d'objets et/ou du volume d'objets et/ou du poids d'objets délivrés dans le canal 11 d'accumulation, de tels paramètres pouvant être déterminés et comparés à des valeurs seuil prédéterminées et/ou calculées en temps réel par l'unité 33 de commande de la ligne 10 de calibrage.

Dans le mode de réalisation représenté, une cellule 35 photoélectrique est associée à chaque canal 11 d'accumulation de façon à détecter la présence d'objets flottants dans une portion 36 amont de la zone 18 de superposition. Cette cellule 35 photoélectrique est reliée à l'unité 33 de commande et adaptée pour pouvoir délivrer un signal correspondant à la détection ou non d'objets flottants en regard de la cellule 35 photoélectrique. La cellule 35 photoélectrique est par exemple placée à distance vers l'aval de la paroi 39 verticale transversale correspondant à l'encombrement longitudinal du chariot 38 accélérateur, c'est-à-dire immédiatement à l'aval de ce dernier lorsqu'il est placé contre la paroi 39 verticale transversale de la zone 18 de superposition.

L'unité 33 de commande pilote d'une part le vérin 34 commandant le papillon 31 de la vanne 30 de canal, d'autre part le moteur 56 d'entraînement du chariot 38 accélérateur en fonction du signal de détection délivré par la cellule 35 photoélectrique.

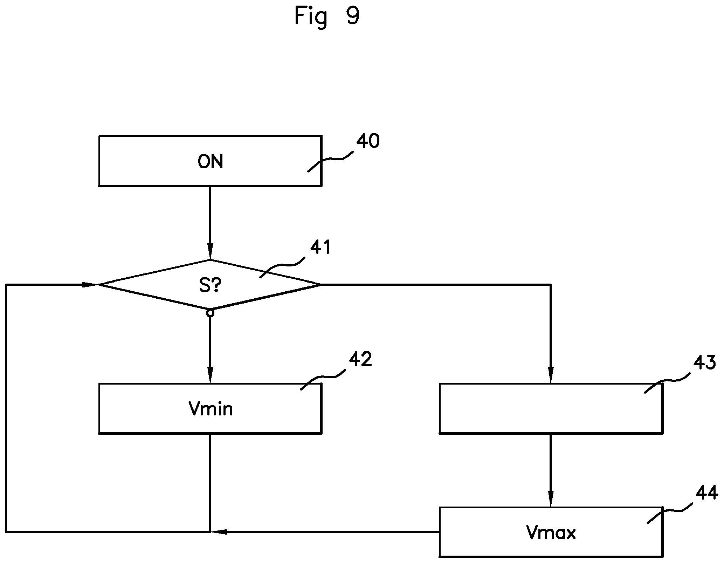

La figure 9 représente un exemple de procédé de commande pouvant être mis en oeuvre par l'unité 33 pour la commande des déplacements de chaque chariot 38 accélérateur. Après une étape 40 de mise en route du circuit hydraulique (démarrage de la pompe 32), le chariot 38 accélérateur étant placé à l'extrémité 13 aval de la zone 18 de superposition contre le dispositif 14 de retenue/libération qui est fermé pour retenir les objets, l'unité 33 de commande examine lors de l'étape 41 de test si la quantité d'objets alimentés dans le canal 11 d'accumulation est suffisante pour pouvoir entamer le déplacement vers l'amont du chariot 38 accélérateur. Comme indiqué ci-dessus, cette détermination peut être faite de différentes manières. Par exemple, la quantité des objets alimentés dans le canal 11 d'accumulation peut être déterminée par l'unité 33 de commande en fonction de la quantité des objets déchargés par la ligne 10 de calibrage, et le déplacement vers l'amont du chariot 38 accélérateur est déclenché si cette quantité ainsi déterminée est supérieure à une valeur seuil prédéterminée (mais qui peut ultérieurement varier en fonction de la position du chariot 38 accélérateur dans la zone 18 de superposition).

Selon une variante possible, l'unité 33 de commande examine l'état du signal S délivré par la cellule 35 photoélectrique. Tant que ce signal S correspond à une absence de détection d'objets (pendant une durée suffisante déterminée par une temporisation) dans le champ de la cellule 35 photoélectrique, l'unité 33 commande (étape 42) le vérin 34 de façon à maintenir le papillon 31 de la vanne 30 de canal en position de débit minimum, correspondant à une première valeur de vitesse moyenne du courant hydraulique et en particulier à une première valeur de vitesse Vmin d'accumulation, relativement faible, du courant hydraulique alimentant le canal 11 d'accumulation. Cette première valeur de vitesse est ajustée pour permettre l'accumulation des objets délivrés par la ligne 10 de calibrage, contre le dispositif 14 de retenue/libération à l'état fermé à l'extrémité 13 aval du canal 11 d'alimentation, et pour minimiser les chocs entre le dispositif 14 de retenue/libération et les objets et entre eux (figure 3). Par exemple, le débit délivré par la vanne 30 de canal dans la position de débit minimum du papillon 31 correspond à une vitesse moyenne d'accumulation du courant hydraulique de l'ordre de 5 à 10 m/min.

Lorsque le signal S délivré par la cellule 35 photoélectrique correspond à une présence d'objets dans le champ de la cellule 35 photoélectrique, l'unité 33 commande (étape 43) le moteur 56 dans le sens de l'enroulement du tambour 55 de façon à entraîner le déplacement du chariot 38 accélérateur vers l'amont sur une distance prédéterminée, par exemple correspondant à l'encombrement longitudinal du chariot 38 accélérateur. En outre, l'unité 33 commande (étape 44) le vérin 34 de façon à placer et maintenir le papillon 31 de la vanne 30 canal en position de débit maximum, correspondant à une deuxième valeur de vitesse moyenne du courant hydraulique, et en particulier à une deuxième valeur de vitesse Vmax de superposition, supérieure à la dite première valeur de vitesse Vmin d'accumulation, du courant hydraulique passant au-dessus du ressaut 17 du le canal 11 d'accumulation. Cette deuxième valeur de vitesse est ajustée pour entraîner la superposition des objets flottants dans le courant hydraulique les uns au-dessus des autres à l'aval du ressaut 17, ces objets étant repoussés vers l'aval par le courant hydraulique sous l'effet de cette vitesse (figure 4) et de l'accélération produite localement par le ressaut 17. Par exemple, le débit délivré par la vanne 30 de canal dans la position de débit maximum du papillon 31 correspond à une vitesse moyenne de superposition du courant hydraulique de l'ordre de 10 à 25 m/min.

L'unité 33 de commande maintient le chariot 38 accélérateur en position et cette deuxième valeur de vitesse de superposition pendant une durée prédéterminée, puis réitère l'étape de test 41. Cette durée est déterminée de façon à obtenir une superposition suffisante des objets à l'aval du ressaut 17, entre le dispositif 14 de retenue/libération et le ressaut 17.

En variante non représentée, rien n'empêche de prévoir au moins une caméra permettant de détecter la superposition des objets à l'aval du ressaut 17 selon un nombre de couches suffisant, l'unité 33 de commande étant adaptée pour analyser les images produites par une telle caméra et compter le nombre de couches de superposition des objets dans la zone 18 de superposition. Une pluralité de telles caméras peuvent être réparties le long de la zone 18 de superposition, par exemple le long des parois latérales dotées à cet effet de fenêtres de visualisation.

Les étapes susmentionnées 41 à 44 peuvent être réitérées jusqu'à ce que le nombre d'objets formant un lot d'objets dans la zone 18 de superposition soit atteint. La longueur de la zone 18 de superposition est adaptée pour que ce nombre d'objets formant un lot puisse entièrement être contenu dans la zone 18 de superposition entre le chariot 38 accélérateur et le dispositif 14 de retenue/libération. Ainsi, pour ce faire, lorsque le chariot 38 accélérateur est en position extrême amont contre la paroi 39 verticale transversale amont de la zone 18 de superposition, la longueur disponible pour contenir les objets superposés entre le chariot 38 accélérateur et le dispositif 14 de retenue/libération est de préférence supérieure à celle strictement nécessaire pour contenir le plus grand nombre d'objets formant un lot d'objets superposés dans la zone 18 de superposition. De la sorte, on assure que le chariot 38 accélérateur ne vienne pas buter contre cette paroi 39 transversale amont.

Le nombre d'objets délivrés dans le canal 11 d'accumulation est compté par exemple au niveau des moyens de déchargement de la ligne 10 de calibrage, cette dernière étant adaptée pour décharger les objets individuellement. Il est à noter que la durée de remplissage de chaque canal 11 d'accumulation peut varier en pratique considérablement, notamment de moins d'une minute pour des objets majoritaires, à plusieurs jours pour des objets minoritaires. Lorsque le nombre d'objets superposés dans la zone 18 de superposition correspondant à un lot est atteint, le dispositif 14 de retenue/libération peut être ouvert, et ce si le poste 16 de réception est prêt à recevoir et traiter le lot de ce canal 11 d'accumulation. Simultanément, l'unité 33 de commande déclenche de débrayage du moteur 56, le tambour 55 pouvant se dérouler librement, le chariot 38 accélérateur pouvant être alors déplacé vers l'aval dans la zone 18 de superposition sous l'effet du courant hydraulique. Les objets superposés sont alors entraînés par le courant hydraulique et repoussés par le chariot 38 accélérateur vers l'aval dans le canal 15 de collecte.

Avec un procédé et un dispositif selon l'invention, grâce à la superposition progressive des objets dans la zone de superposition de chaque canal 11 d'accumulation en un nombre important de couches, la longueur totale de chaque canal 11 d'accumulation peut être grandement réduite, au bénéfice d'une compacité beaucoup plus importante de l'ensemble de l'installation. En outre, la superposition intervient beaucoup plus rapidement. Également, le guidage du canal 11 d'accumulation est grandement accéléré. Il en résulte une amélioration importante de la productivité de l'installation.

Il va de soi que l'invention peut faire l'objet de nombreuses variantes de réalisation par rapport au mode de résiliation représenté sur les figures et décrit ci-dessus, pour autant que ces variantes restent dans la portée des revendications.

En particulier, il peut être prévu plusieurs cellules photoélectriques et/ou plusieurs caméras permettant de contrôler la présence des objets et leur bonne superposition pour chaque canal 11 d'accumulation. Le chariot 38 accélérateur peut être un chariot automoteur et/ou porté au moins une cellule photoélectrique et/ou au moins une caméra reliée à l'unité 33 de commande, notamment par liaison sans fil.

Par ailleurs, il peut être prévu plusieurs positions différentes du papillon 31, correspondant à plusieurs valeurs de vitesses différentes, aussi bien en phase d'accumulation qu'en phase de superposition. Par exemple, la vitesse de superposition Vmax peut être initialement relativement faible (elle doit initialement être juste suffisante pour commencer à créer une superposition des objets) et augmentée au fur et à mesure des différentes phases successives de superposition, pour prendre une valeur maximum en fin d'accumulation d'un lot d'objets, la superposition des objets nécessitant alors une énergie plus importante. Par exemple, il est possible d'augmenter la valeur de la vitesse de superposition en fonction du nombre de couches d'objets superposés dans la zone 18 de superposition.

Il est aussi possible de prévoir des variations continues (et non discrète) de la position du papillon 31, et donc du débit du courant hydraulique et de la vitesse de ce dernier. En particulier, il est possible de prévoir que l'unité 33 commande une variation continue de la position du papillon 31 à partir de la vitesse d'accumulation jusqu'à atteindre une valeur suffisante correspondant à une vitesse de superposition, c'est-à-dire apte à entraîner une superposition hydraulique des objets, superposition détectée par au moins une cellule photoélectrique et/ou au moins une caméra.

En outre, la ligne 10 de calibrage peut être remplacée par tout autre dispositif d'alimentation sélective des canaux d'accumulation. Et le canal 15 de collecte et le poste 16 de réception peuvent être remplacés par tout autre dispositif de traitement des lots d'objets évacués à l'aval des canaux 11 d'accumulation.

Rien n'empêche de prévoir également en variante que le moteur 56 d'entraînement soit adapté pour entraîner le tambour 55 en rotation dans le sens du déroulement du câble 53 de traction. Rien n'empêche également selon une autre variante de prévoir un câble d'entraînement agencé pour former une boucle présentant deux extrémités reliées l'une à l'amont du chariot accélérateur, l'autre à l'aval du chariot, cette boucle étant entraînée par un dispositif motorisé approprié, soit vers l'amont soit vers l'aval. Également, au lieu de traverser la paroi 39 verticale, le câble d'entraînement du chariot accélérateur peut être renvoyé vers le haut au-dessus du canal d'accumulation, le tambour et le moteur d'entraînement de ce tambour étant placés au-dessus du canal d'accumulation. On évite ainsi les risques de fuite à la traversée de la paroi.

## Revendications

1. Procédé de groupage en lots d'objets flottants dans au moins un canal, dit canal (11) d'accumulation, dans lequel :
- un courant hydraulique apte à transporter les objets est formé dans chaque canal (11) d'accumulation,
- une portion amont d'au moins un canal d'accumulation est alimentée avec des objets de sorte que les objets sont transportés par le courant hydraulique le long du canal d'accumulation jusqu'à une extrémité (13) aval de ce dernier dotée d'un dispositif (14) de retenue/libération des objets, ce dispositif (14) de retenue/libération étant transparent au courant hydraulique circulant dans le canal (11) d'accumulation,
- chaque canal (11) d'accumulation présentant un fond et des parois latérales et, au moins dans une portion aval de ce dernier, dite zone (18) de superposition, une hauteur supérieure à deux fois l'encombrement vertical maximum de chaque objet de façon à pouvoir recevoir des objets superposés,
- la vitesse du courant hydraulique formé dans chaque canal (11) d'accumulation est accélérée localement par un ressaut (17) vers le haut du fond (19) du canal (11) d'accumulation formant une restriction de section transversale du canal (11) d'accumulation ayant pour effet d'accélérer localement la vitesse du courant hydraulique passant au-dessus de ce ressaut, de façon à entraîner une superposition des objets retenus dans la zone de superposition du canal (11) d'accumulation entre ledit ressaut (17) et le dispositif (14) de retenue/libération fermé pour retenir les objets,
**caractérisé en ce que** lors d'une étape d'accumulation d'objets dans un canal (11) d'accumulation, ledit ressaut (17) est déplacé dans ladite zone (18) de superposition depuis l'extrémité (13) aval du canal (11) d'accumulation vers l'amont au fur et à mesure de l'alimentation des objets.

2. Procédé selon la revendication 1 **caractérisé en ce que** lors d'une étape d'accumulation d'objets dans un canal (11) d'accumulation, un chariot, dit chariot accélérateur, formant ledit ressaut (17) est déplacé sur le fond (19) du canal (11) d'accumulation dans ladite zone (18) de superposition dans le courant hydraulique depuis l'extrémité (13) aval du canal (11) d'accumulation vers l'amont au fur et à mesure de l'alimentation des objets de façon à entraîner la superposition des objets en plusieurs couches dans la zone (18) de superposition entre ledit chariot accélérateur et le dispositif (14) de retenue/libération fermé pour retenir les objets.

3. Procédé selon l'une quelconque des revendications 1 ou 2 **caractérisé en ce que** lors d'une étape de vidage d'un canal (11) d'accumulation, le dispositif (14) de retenue/libération est ouvert de façon à permettre l'évacuation des objets entraînés par le courant hydraulique hors du canal (11) d'accumulation, et ledit ressaut (17) est déplacé dans ladite zone (18) de superposition vers l'extrémité (13) aval du canal (11) d'accumulation en repoussant les objets hors du canal (11) d'accumulation.

4. Procédé selon la revendication 3 **caractérisé en ce que** lors d'une étape de vidage ledit ressaut (17) est déplacé vers l'extrémité (13) aval du canal (11) d'accumulation sous l'effet du courant hydraulique.

5. Procédé selon l'une des revendications 1 à 4 **caractérisé en ce que** lors d'une étape d'accumulation d'objets dans un canal (11) d'accumulation :
- ledit ressaut (17) est maintenu fixe dans le canal (11) d'accumulation tant qu'une quantité d'objets alimentés dans le canal (11) d'accumulation n'est pas atteinte,
- ledit ressaut (17) est déplacé vers l'amont dans le canal (11) d'accumulation lorsque ladite quantité d'objets alimentés dans le canal (11) d'accumulation est atteinte.

6. Dispositif de groupage en lots d'objets flottants comprenant :
- au moins un canal, dit canal (11) d'accumulation,
- un dispositif d'alimentation hydraulique adapté pour former, dans chaque canal (11) d'accumulation, un courant hydraulique apte à transporter les objets le long du canal d'accumulation,
- un dispositif (10) d'alimentation en objets d'une portion amont de chaque canal d'accumulation,
- chaque canal d'accumulation étant doté, à une extrémité (13) aval de ce dernier, d'un dispositif (14) de retenue/libération des objets qu'il contient, ce dispositif (14) de retenue/libération étant transparent au courant hydraulique circulant dans le canal (11) d'accumulation,
- chaque canal (11) d'accumulation présentant présentant un fond et des parois latérales et, au moins dans une portion aval de ce dernier, dite zone (18) de superposition, une hauteur supérieure à deux fois l'encombrement vertical maximum de chaque objet de façon à pouvoir recevoir des objets superposés,
- chaque canal (11) d'accumulation comprenant un ressaut (17) vers le haut du fond (19) du canal (11) d'accumulation adapté pour former une restriction (17) de section transversale du canal (11) d'accumulation ayant pour effet d'accélérer localement la vitesse du courant hydraulique passant au-dessus de ce ressaut, de façon à entraîner une superposition des objets retenus dans la zone de superposition du canal (11) d'accumulation entre ledit ressaut (17) et le dispositif (14) de retenue/libération fermé pour retenir les objets,
**caractérisé en ce que** :
- ledit ressaut (17) de chaque canal (11) d'accumulation est formée par un dispositif mobile dans ladite zone (18) de superposition,
- chaque canal (11) d'accumulation comporte un dispositif motorisé d'entraînement en déplacement dudit dispositif mobile dans ladite zone (18) de superposition depuis l'extrémité (13) aval du canal (11) d'accumulation vers l'amont.

7. Dispositif selon la revendication 6 **caractérisé en ce que** ledit ressaut (17) comprend un pan amont incliné vers le haut vers l'aval.

8. Dispositif selon l'une quelconque des revendications 6 ou 7 **caractérisé en ce que** ledit ressaut (17) de chaque canal (11) d'accumulation est formé par un chariot, dit chariot accélérateur, mobile le long de ladite zone (18) de superposition, et **en ce que** ledit dispositif motorisé d'entraînement est adapté pour pouvoir entraîner ledit chariot accélérateur en déplacement sur le fond (19) du canal (11) d'accumulation dans ladite zone (18) de superposition vers l'amont depuis l'extrémité (13) aval du canal (11) d'accumulation.

9. Dispositif selon la revendication 8 **caractérisé en ce que** ledit chariot accélérateur est guidé en translation dans la zone (18) de superposition par au moins une partie des parois du canal (11) d'accumulation.

10. Dispositif selon l'une quelconque des revendications 8 ou 9 **caractérisé en ce que** ledit chariot accélérateur est doté d'organes de brossage d'au moins une partie des parois du canal d'accumulation.

11. Dispositif selon l'une des revendications 8 à 10 **caractérisé en ce que** ledit dispositif motorisé d'entraînement comprend :
- au moins un câble relié audit chariot accélérateur, s'étendant vers l'amont du chariot accélérateur,
- un dispositif motorisé de traction d'au moins un tel câble vers l'amont.

12. Dispositif selon l'une des revendications 6 à 11 **caractérisé en ce que** ledit dispositif motorisé d'entraînement est adapté pour permettre un déplacement dudit dispositif mobile dans ladite zone (18) de superposition vers l'extrémité (13) aval du canal (11) d'accumulation.

13. Dispositif selon l'une des revendications 6 à 12 **caractérisé en ce que** chaque dispositif mobile est adapté pour pouvoir être entraîné vers l'aval sous l'effet du courant hydraulique circulant dans le canal (11) d'accumulation.

14. Dispositif selon l'une des revendications 6 à 13 **caractérisé en ce que** :
- il comporte une pluralité de canaux (11) d'accumulation,
- ledit dispositif (10) d'alimentation en objets est un dispositif d'alimentation sélective comprenant au moins une ligne, dite ligne (10) de calibrage, de convoyage, d'analyse et de tri des objets en fonction de critères prédéterminés, ladite ligne de calibrage comprenant des moyens de déchargement sélectif des objets dans les différents canaux (11) d'accumulation.

15. Dispositif selon l'une des revendications 6 à 14 **caractérisé en ce qu'**il comprend en outre un canal hydraulique, dit canal (15) de collecte, à l'aval et en communication avec chaque canal (11) d'accumulation de façon à pouvoir recevoir le courant hydraulique et des objets évacués par le dispositif (14) de retenue/libération lorsque ce dernier est ouvert, au moins un poste (16) de réception de lots d'objets délivrés par ledit canal (15) de collecte, et un circuit de recirculation du courant hydraulique entre chaque poste (16) de réception de lots d'objets et ledit dispositif d'alimentation hydraulique de chaque canal (11) d'accumulation.

## Patentansprüche

1. Verfahren zum Gruppieren von Schwimmartikeln in Chargen in mindestens einem Kanal, der als Akkumulierkanal (11) bezeichnet wird, wobei:
- ein hydraulischer Strom, der dafür geeignet ist, die Objekte zu transportieren, in jedem Akkumulierkanal (11) gebildet wird,
- einem Abschnitt stromaufwärts von mindestens einem Akkumulierkanal Objekte derart zugeführt werden, dass die Objekte von dem hydraulischen Strom entlang des Akkumulierkanals bis zu einem stromabwärtigen Ende (13) dieses Letzteren transportiert werden, das mit einer Vorrichtung (14) zum Halten/Freigeben der Objekte versehen ist, wobei diese Vorrichtung (14) zum Halten/Freigeben transparent in dem hydraulischen Strom ist, der in dem Akkumulierkanal (11) zirkuliert,
- jeder Akkumulierkanal (11) einen Boden und laterale Wände und, mindestens in einem stromabwärtigen Abschnitt dieses Letzteren, der als Überlagerungszone (18) bezeichnet wird, eine Höhe aufweist, die größer ist als der zweifache maximale vertikale Platzbedarf jedes Objekts, um die überlagerten Objekte aufnehmen zu können,
- die Geschwindigkeit des hydraulischen Stroms, der in jedem Akkumulierkanal (11) gebildet wird, lokal durch einen Vorsprung (17) vom Boden (19) des Akkumulierkanals (11) nach oben beschleunigt wird, der eine Verengung des Querschnitts des Akkumulierkanals (11) bildet, die den Effekt hat, die Geschwindigkeit des hydraulischen Stroms, der über diesem Vorsprung hindurchgeht, lokal zu beschleunigen, um eine Überlagerung der Objekte zu bewirken, die in der Überlagerungszone des Akkumulierkanals (11) zwischen dem genannten Vorsprung (17) und der Vorrichtung (14) zum Halten/Freigeben gehalten werden, die geschlossen wird, um die Objekte zu halten,
**dadurch gekennzeichnet, dass**, bei einem Schritt des Akkumulierens von Objekten in einem Akkumulierkanal (11), der genannte Vorsprung (17) in der genannten Überlagerungszone (18) von dem stromabwärtigen Ende (13) des Akkumulierkanals (11) zu der stromaufwärtigen Seite zum Zuführen der Objekte nach und nach verschoben wird.

2. Verfahren nach Anspruch 1, **dadurch gekennzeichnet, dass**, bei einem Schritt des Akkumulierens von Objekten in einem Akkumulierkanal (11), ein Wagen, der als Beschleunigungswagen bezeichnet wird, und der den genannten Vorsprung (17) bildet, auf dem Boden (19) des Akkumulierkanals (11) in der genannten Überlagerungszone (18) in dem hydraulischen Strom von dem stromabwärtigen Ende (13) des Akkumulierkanals (11) zu der stromaufwärtigen Seite zum Zuführen der Objekte nach und nach verschoben wird, um die Überlagerung der Objekte in mehreren Schichten in der Überlagerungszone (18) zwischen dem genannten Beschleunigungswagen und der Vorrichtung (14) zum Halten/Freigeben zu bewirken, die geschlossen wird, um die Objekte zu halten.

3. Verfahren nach einem der Ansprüche 1 oder 2, **dadurch gekennzeichnet, dass**, bei einem Schritt des Entleerens eines Akkumulierkanals (11), die Vorrichtung (14) zum Halten/Freigeben geöffnet wird, um die Abfuhr der Objekte, die von dem hydraulischen Strom mitgeführt werden, aus dem Akkumulierkanal (11) zu gestatten, und der genannte Vorsprung (17) in der genannten Überlagerungszone (18) zu dem stromabwärtigen Ende (13) des Akkumulierkanals (11) verschoben wird, indem die Objekte aus dem Akkumulierkanal (11) ausgestoßen werden.

4. Verfahren nach Anspruch 3, **dadurch gekennzeichnet, dass**, bei einem Schritt des Entleerens, der genannte Vorsprung (17) zu dem stromabwärtigen Ende (13) des Akkumulierkanals (11) unter der Einwirkung des hydraulischen Stroms verschoben wird.

5. Verfahren nach einem der Ansprüche 1 bis 4, **dadurch gekennzeichnet, dass**, bei einem Schritt des Akkumulierens von Objekten in einem Akkumulierkanal (11):
- der genannte Vorsprung (17) fest in dem Akkumulierkanal (11) gehalten wird, solange eine Menge an Objekten, die in dem Akkumulierkanal (11) zugeführt werden, nicht erzielt wird,
- der genannte Vorsprung (17) zu der stromaufwärtigen Seite in dem Akkumulierkanal (11) verschoben wird, wenn die genannte Menge an Objekten, die in dem Akkumulierkanal (11) zugeführt werden, erzielt wird.

6. Vorrichtung zum Gruppen von Schwimmartikeln in Chargen, umfassend:
- mindestens einen Kanal, der als Akkumulierkanal (11) bezeichnet wird,
- eine hydraulische Zufuhrvorrichtung, die dafür eingerichtet ist, in jedem Akkumulierkanal (11) einen hydraulischen Strom zu bilden, der dafür geeignet ist, die Objekte entlang des Akkumulierkanals zu transportieren,
- eine Vorrichtung (10) zum Zuführen von Objekten von einem stromaufwärtigen Abschnitt jedes Akkumulierkanals,
- wobei jeder Akkumulierkanal, an einem stromabwärtigen Ende (13) dieses Letzteren, mit einer Vorrichtung (14) zum Halten/Freigeben der Objekte versehen ist, die er enthält, wobei diese Vorrichtung (14) zum Halten/Freigeben transparent in dem hydraulischen Strom ist, der in dem Akkumulierkanal (11) zirkuliert,
- wobei jeder Akkumulierkanal (11) einen Boden und laterale Wände und, mindestens in einem stromabwärtigen Abschnitt dieses Letzteren, der als Überlagerungszone (18) bezeichnet wird, eine Höhe aufweist, die größer ist als der zweifache maximale vertikale Platzbedarf jedes Objekts, um die überlagerten Objekte aufnehmen zu können,
- wobei jeder Akkumulierkanal (11) einen Vorsprung (17) vom Boden (19) des Akkumulierkanals (11) nach oben aufweist, der dafür eingerichtet ist, eine Verengung (17) des Querschnitts des Akkumulierkanals (11) zu bilden, die den Effekt hat, die Geschwindigkeit des hydraulischen Stroms, der über diesem Vorsprung hindurchgeht, lokal zu beschleunigen, um eine Überlagerung der Objekte zu bewirken, die in der Überlagerungszone des Akkumulierkanals (11) zwischen dem genannten Vorsprung (17) und der Vorrichtung (14) zum Halten/Freigeben gehalten werden, die geschlossen wird, um die Objekte zu halten,
**dadurch gekennzeichnet, dass**:
- der genannte Vorsprung (17) jedes Akkumulierkanals (11) durch eine bewegbare Vorrichtung in der genannten Überlagerungszone (18) gebildet wird,
- jeder Akkumulierkanal (11) eine motorisierte Vorrichtung zum Mitverschieben der genannten bewegbaren Vorrichtung in der genannten Überlagerungszone (18) von dem stromabwärtigen Ende (13) des Akkumulierkanals (11) zu der stromaufwärtigen Seite umfasst.

7. Vorrichtung nach Anspruch 6, **dadurch gekennzeichnet, dass** der genannte Vorsprung (17) eine stromaufwärtige Fläche umfasst, die nach oben zu der stromabwärtigen Seite geneigt ist.

8. Vorrichtung nach einem der Ansprüche 6 oder 7, **dadurch gekennzeichnet, dass** der genannte Vorsprung (17) jedes Akkumulierkanals (11) von einem Wagen gebildet wird, der als Beschleunigungswagen bezeichnet wird, und der entlang der genannten Überlagerungszone (18) bewegbar ist, und dadurch, dass die genannte motorisierte Mitführvorrichtung dafür eingerichtet ist, den genannten Beschleunigungswagen auf dem Boden (19) des Akkumulierkanals (11) in der genannten Überlagerungszone (18) zu der stromaufwärtigen Seite von dem stromabwärtigen Ende (13) des Akkumulierkanals (11) mitzuverschieben.

9. Vorrichtung nach Anspruch 8, **dadurch gekennzeichnet, dass** der genannte Beschleunigungswagen translatorisch in der Überlagerungszone (18) durch mindestens einen Teil der Wände des Akkumulierkanals (11) geführt wird.

10. Vorrichtung nach einem der Ansprüche 8 oder 9, **dadurch gekennzeichnet, dass** der genannte Beschleunigungswagen mit Bürstenelementen für mindestens einen Teil der Wände des Akkumulierkanals versehen ist.

11. Vorrichtung nach einem der Ansprüche 8 bis 10, **dadurch gekennzeichnet, dass** die genannte motorisierte Mitführvorrichtung umfasst:
- mindestens ein Kabel, das mit dem genannten Beschleunigungswagen verbunden ist, und das sich zu der stromaufwärtigen Seite des Beschleunigungswagens erstreckt,
- eine motorisierte Zugvorrichtung mindestens eines solchen Kabels zu der stromaufwärtigen Seite.

12. Vorrichtung nach einem der Ansprüche 6 bis 11, **dadurch gekennzeichnet, dass** die genannte motorisierte Mitführvorrichtung dafür eingerichtet ist, eine Verschiebung der genannten bewegbaren Vorrichtung in der genannten Überlagerungszone (18) zu dem stromabwärtigen Ende (13) des Akkumulierkanals (11) zu gestatten.

13. Vorrichtung nach einem der Ansprüche 6 bis 12, **dadurch gekennzeichnet, dass** jede bewegbare Vorrichtung dafür eingerichtet ist, zu der stromabwärtigen Seite unter der Einwirkung des hydraulischen Stroms mitgeführt werden zu können, der in dem Akkumulierkanal (11) zirkuliert.

14. Vorrichtung nach einem der Ansprüche 6 bis 13, **dadurch gekennzeichnet, dass**:
- sie eine Vielzahl von Akkumulierkanälen (11) umfasst,
- die genannte Vorrichtung (10) zum Zuführen von Objekten eine Vorrichtung zum selektiven Zuführen ist, umfassend mindestens eine Linie, die als Linie (10) zum Kalibrieren, Befördern, Analysieren und Sortieren von Objekten in Abhängigkeit von vorherbestimmten Kriterien bezeichnet wird, wobei die genannte Kalibrierlinie Mittel zum selektiven Entladen von Objekten in die verschiedenen Akkumulierkanäle (11) umfasst.

15. Vorrichtung nach einem der Ansprüche 6 bis 14, **dadurch gekennzeichnet, dass** sie außerdem umfasst: einen hydraulischen Kanal, der als Sammelkanal (15) bezeichnet wird, stromabwärts von und in Kommunikation mit jedem Akkumulierkanal (11), um den hydraulischen Strom und die Objekte aufnehmen zu können, die von der Vorrichtung (14) zum Halten/Freigeben abgeführt werden, wenn diese Letztere geöffnet ist, mindestens eine Aufnahmestation (16) von Chargen von Objekten, die von dem genannten Sammelkanal (15) geliefert werden, und einen Rezirkulationskreislauf des hydraulischen Stroms zwischen jeder Aufnahmestation (16) der Chargen von Objekten und der genannten hydraulischen Zufuhrvorrichtung jedes Akkumulierkanals (11).

## Claims

1. - Method for grouping into batches buoyant objects in at least one channel, named accumulation channel (11), wherein:
- a hydraulic stream able to transport the objects is formed in each accumulation channel (11),
- an upstream portion of at least one accumulation channel is supplied with objects such that the objects are transported by the hydraulic stream along the accumulation channel to a downstream end (13) thereof provided with a device (14) for holding/releasing the objects, this holding/releasing device (14) being transparent to the hydraulic stream flowing in the accumulation channel (11),
- each accumulation channel (11) having a bottom and side walls and, at least in a downstream portion thereof, named superposition zone (18), a height greater than twice the maximum vertical size of each object so as to be able to receive superposed objects,
- the speed of the hydraulic stream formed in each accumulation channel (11) is accelerated locally by an elevation (17) extending upwards from the bottom (19) of the accumulation channel (11) forming a reduction in the cross-section of the accumulation channel (11) having the effect of locally accelerating the speed of the hydraulic stream passing above this elevation, so as to cause a superposition of the objects held in the superposition zone of the accumulation channel (11) between said elevation (17) and the closed holding/releasing device (14) to hold the objects, **characterised in that** during a step of accumulating objects in an accumulation channel (11), said elevation (17) is moved upstream in said superposition zone (18) from the downstream end (13) of the accumulation channel (11) as the objects are being supplied.

2. - Method according to claim 1, **characterised in that** during a step of accumulating objects in an accumulation channel (11), a carriage, named accelerating carriage, forming said elevation (17) is moved upstream on the bottom (19) of the accumulation channel (11) in said superposition zone (18) in the hydraulic stream from the downstream end (13) of the accumulation channel (11) as the objects are being supplied so as to cause the superposition of the objects in several layers in the superposition zone (18) between said accelerating carriage and the closed holding/releasing device (14) for holding the objects.

3. - Method according to any one of claims 1 or 2, **characterised in that** during a step of emptying an accumulation channel (11) the holding/releasing device (14) is opened so as to allow the objects driven by the hydraulic stream to leave the accumulation channel (11), and said elevation (17) is moved in said superposition zone (18) to the downstream end (13) of the accumulation channel (11), urging the objects out of the accumulation channel (11).

4. - Method according to claim 3, **characterised in that** during an emptying step said elevation (17) is moved to the downstream end (13) of the accumulation channel (11) under the effect of the hydraulic stream.

5. - Method according to any one of claims 1 to 4, **characterised in that** during a step of accumulating objects in an accumulation channel (11):
- said elevation (17) is kept fixed in the accumulation channel (11) as long as an amount of objects supplied in the accumulation channel (11) is not reached,
- said elevation (17) is moved upstream in the accumulation channel (11) when said amount of objects supplied in the accumulation channel (11) is reached.

6. - Device for grouping into batches buoyant objects, comprising:
- at least one channel, named accumulation channel (11),
- a hydraulic supply device adapted to form, in each accumulation channel (11), a hydraulic stream able to transport the objects along the accumulation channel,
- a device (10) for supplying objects to an upstream portion of each accumulation channel,
- each accumulation channel being provided, at a downstream end (13) thereof, with a device (14) for holding/releasing the objects contained therein, this holding/releasing device (14) being transparent to the hydraulic stream flowing in the accumulation channel (11),
- each accumulation channel (11) having a bottom and side walls and, at least in a downstream portion thereof, named superposition zone (18), a height greater than twice the maximum vertical size of each object so as to be able to receive superposed objects,
- each accumulation channel (11) comprising an elevation (17) extending upwards from the bottom (19) of the accumulation channel (11) adapted to form a reduction (17) in the cross-section of the accumulation channel (11) having the effect of locally accelerating the speed of the hydraulic stream passing above this elevation, so as to cause a superposition of the objects held in the superposition zone of the accumulation channel (11) between said elevation (17) and the closed holding/releasing device (14) to hold the objects,
**characterised in that**:
- said elevation (17) of each accumulation channel (11) is formed by a movable device in said superposition zone (18),
- each accumulation channel (11) has a motor-driven device for causing said movable device to move upstream in said superposition zone (18) from the downstream end (13) of the accumulation channel (11).

7. - Device according to claim 6, **characterised in that** said elevation (17) comprises an upstream face inclined upwards and downstream.

8. - Device according to any one of claims 6 or 7, **characterised in that** said elevation (17) of each accumulation channel (11) is formed by a carriage, named accelerating carriage, which can move along said superposition zone (18), and **in that** said motor-driven drive device is adapted to be able to cause said accelerating carriage to move upstream on the bottom (19) of the accumulation channel (11) in said superposition zone (18) from the downstream end (13) of the accumulation channel (11).

9. - Device according to claim 8, **characterised in that** said accelerating carriage is guided in translation in the superposition zone (18) by at least one part of the walls of the accumulation channel (11).

10. - Device according to any one of claims 8 or 9, **characterised in that** said accelerating carriage is provided with members brushing at least one part of the walls of the accumulation channel.

11. - Device according to any one of claims 8 to 10, **characterised in that** said motor-driven drive device comprises:
- at least one cable connected to said accelerating carriage, extending upstream of the accelerating carriage,
- a motor-driven device pulling at least one such cable upstream.

12. - Device according to any one of claims 6 to 11, **characterised in that** said motor-driven drive device is adapted to allow movement of said movable device in said superposition zone (18) to the downstream end (13) of the accumulation channel (11).

13. - Device according to any one of claims 6 to 12, **characterised in that** each movable device is adapted to be able to be driven downstream under the effect of the hydraulic stream flowing in the accumulation channel (11).

14. - Device according to any one of claims 6 to 13, **characterised in that**:
- it comprises a plurality of accumulation channels (11),
- said device (10) for supplying objects is a selective supply device comprising at least one line, named grading line (10), for conveying, analysing and sorting objects based on predetermined criteria, said grading line comprising means for selectively discharging the objects into the different accumulation channels (11).

15. - Device according to any one of claims 6 to 14, **characterised in that** it further comprises a hydraulic channel, named collecting channel (15), downstream of, and in communication with, each accumulation channel (11) so as to be able to receive the hydraulic stream and objects discharged by the holding/releasing device (14) when the latter is open, at least one station (16) for receiving batches of objects delivered by said collecting channel (15), and a circuit for recirculating the hydraulic stream between each station (16) for receiving batches of objects and said hydraulic supply device of each accumulation channel (11).
